(19) Europäisches Patentamt
European Patent Office
Office européen des brevets

(11) **EP 4 296 077 B1**

(12) **EUROPEAN PATENT SPECIFICATION**

(45) Date of publication and mention
of the grant of the patent:
**14.05.2025 Bulletin 2025/20**

(21) Application number: **22756331.9**

(22) Date of filing: **21.02.2022**

(51) International Patent Classification (IPC):
*B60C 1/00* (2006.01)    *C08J 3/22* (2006.01)
*C08K 5/06* (2006.01)    *C08L 1/00* (2006.01)
*C08L 1/02* (2006.01)    *C08L 21/00* (2006.01)
*C08L 21/02* (2006.01)    *C08L 71/02* (2006.01)

(52) Cooperative Patent Classification (CPC):
(C-Sets available)
**C08L 71/02; B60C 1/00; C08J 3/20; C08J 3/226;
C08L 9/06;** C08J 2309/06; C08J 2409/06    (Cont.)

(86) International application number:
**PCT/JP2022/007029**

(87) International publication number:
**WO 2022/177014 (25.08.2022 Gazette 2022/34)**

(54) **COMPOSITION CONTAINING CELLULOSE NANOFIBERS**

ZUSAMMENSETZUNG MIT CELLULOSENANOFASERN

COMPOSITION CONTENANT DES NANOFIBRES DE CELLULOSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2021 JP 2021026110
02.12.2021 JP 2021196429**

(43) Date of publication of application:
**27.12.2023 Bulletin 2023/52**

(73) Proprietor: **Asahi Kasei Kabushiki Kaisha
Tokyo 1000006 (JP)**

(72) Inventors:
• **OZAWA, Ryosuke**
**Tokyo 100-0006 (JP)**
• **KAWAHARA, Kazufumi**
**Tokyo 100-0006 (JP)**
• **BAMBA, Atsushi**
**Tokyo 100-0006 (JP)**

(74) Representative: **D Young & Co LLP
3 Noble Street
London EC2V 7BQ (GB)**

(56) References cited:
**EP-A1- 3 581 618**    **EP-A1- 3 747 939**
**EP-A1- 3 757 159**    **WO-A1-2016/132691**
**JP-A- 2019 147 877**    **JP-A- 2020 063 327**
**JP-A- 2021 001 292**

(52) Cooperative Patent Classification (CPC): (Cont.)

C-Sets
**C08L 9/06, C08L 1/02, C08L 71/02;**
**C08L 71/02, C08K 7/02, C08L 1/00, C08L 21/00**

## Description

FIELD

One aspect of the present disclosure relates to a composition containing cellulose nanofibers.

BACKGROUND

Conventional rubber molded articles are required to exhibit high balance between various physical properties such as mechanical strength, softness, abrasion resistance and workability, and it is common to add fillers to rubber molded articles in order to improve their elastic modulus, hardness and abrasion resistance, for example. In order for rubber molded articles containing such fillers to exhibit the desired properties it is important for the filler to be satisfactorily dispersed in the rubber.

PTL 1, for example, describes a rubber composition for a tire, wherein oxidized cellulose nanofibers are added to diene rubber containing modified diene rubber, for the purpose of improving the mechanical properties.

[CITATION LIST]

[PATENT LITERATURE]

[PTL 1] Japanese Unexamined Patent Publication No. 2019-147877

SUMMARY

[TECHNICAL PROBLEM]

With increasing awareness of environmental issues in recent years, many attempts have been made to utilize cellulose, a material with low specific gravity and high renewability, as a filler in rubber molded articles. Cellulose nanofibers are considered particularly promising as a filler for polymer molded articles, because of their satisfactory reinforcing effect for their amounts used in polymer molded articles, when they are combined with different polymers to form polymer molded articles. Using such cellulose nanofibers in rubber molded articles is expected to make possible rubber molded articles with low specific gravity and excellent physical properties that can be utilized for a wide variety of purposes, with advantages in terms of transport cost and disposal cost. However, since cellulose nanofibers are essentially hydrophilic due to the hydroxyl groups in cellulose, it has been difficult to combine them with rubber, which is a highly hydrophobic material. PTL 1 describes a rubber composition for a tire wherein a filler of oxidized cellulose nanofibers is dispersed in diene rubber containing modified diene rubber. This technology, however, is for improving dispersibility of the modified diene rubber by increasing the affinity of oxidized cellulose nanofibers for diene rubber. No rubber molded article has yet been provided having cellulose nanofibers satisfactorily dispersed in rubber even when the cellulose nanofibers lack ionic groups.

It is an object of one aspect of the invention to solve this problem by providing a rubber composition that has cellulose nanofibers satisfactorily dispersed in the rubber, and that can form molded articles with excellent elastic modulus and abrasion resistance.

[SOLUTION TO PROBLEM]

The present invention is defined by the appended claims. Specifically, the present invention encompasses the following aspects.

An aspect of the present invention provides a rubber composition including cellulose nanofibers, a first rubber component which is a liquid rubber, and a surfactant, wherein the surfactant is a nonionic surfactant.

In various embodiments, the cellulose nanofibers contain no ionic groups.

In various embodiments, a degree of substitution of the cellulose nanofibers is 0.

In various embodiments, the rubber composition disclosed herein includes the cellulose nanofibers at 0.5 mass% to 10 mass%.

In various embodiments, the rubber composition disclosed herein includes the surfactant at 10 parts by mass to 200 parts by mass with respect to 100 parts by mass of the cellulose nanofibers.

In various embodiments the nonionic surfactant is a compound having a hydrophilic group selected from the group consisting of hydroxyl, carboxy, sulfonic acid and amino groups, and a hydrocarbon group.

In various embodiments, the nonionic surfactant is one or more types selected from the group consisting of compounds represented by the following general formula (1):

$$R\text{-}(OCH_2CH_2)_m\text{-}OH \qquad (1)$$

[where R represents a monovalent aliphatic group of 6 to 30 carbon atoms, and m is a natural number smaller than the number of carbon atoms of R], and
compounds represented by the following general formula (2):

$$R_1OCH_2\text{-}(CHOH)_4\text{-}CH_2OR_2 \qquad (2)$$

[where $R_1$ and $R_2$ each independently represent a hydrogen atom, an aliphatic group of 1 to 30 carbon atoms, -$COR_3$ {where $R_3$ represents an aliphatic group of 1 to 30 carbon atoms} or - $(CH_2CH_2O)_y$-$R_4$ {where $R_4$ represents a hydrogen atom or an aliphatic group of 1 to 30 carbon atoms, and y is an integer of 1 to 30}].

In various embodiments at least parts of the surfaces of the cellulose nanofibers are covered by the first rubber component.

Also provided is a powder composed of the rubber composition disclosed herein.

In various embodiments of the powder disclosed herein, the compacted bulk density is $0.01 \, \text{g/cm}^3$ to $0.30 \, \text{g/cm}^3$ .

Also provided is a master batch which is a kneaded blend of the powder disclosed herein and a second rubber component.

Also provided is a method for producing a master batch, wherein the method includes a step of kneading the powder disclosed herein and a second rubber component to obtain a master batch.

Also provided is a rubber composite which is a kneaded blend of a powder as disclosed herein or a master batch as disclosed herein, and a third rubber component.

In various embodiments of the rubber composite disclosed herein, at least parts of the surfaces of the cellulose nanofibers are covered by the first rubber component.

Also provided is a method for producing a rubber composite, wherein the method includes a step of obtaining a rubber composite by:

kneading the powder disclosed herein and a third rubber component, or
forming a master batch by the method disclosed herein and then kneading the master batch with a third rubber component.

In various embodiments of said method for producing a rubber composite, at least parts of the surfaces of the cellulose nanofibers are covered by the first rubber component in the rubber composite.

Also provided is a cured rubber product, which is the cured product of a rubber composite as disclosed herein.

Also provided is a method for producing a cured rubber product, wherein the method includes:

a step of obtaining a rubber composite by the method as disclosed herein, and
a step of curing the rubber composite to obtain a cured rubber product.

Also provided is a shoe outsole which includes a cured rubber product as disclosed herein.

Also provided is a tire which includes a cured rubber product as disclosed herein.

Also provided is vibration-proof rubber which includes a cured rubber product as disclosed herein.

Also provided is a drive belt which includes a cured rubber product as described herein.

[ADVANTAGEOUS EFFECTS OF INVENTION]

According to one aspect of the invention it is possible to provide a rubber composition that has cellulose nanofibers satisfactorily dispersed in the rubber, and that can form molded articles with an excellent elastic modulus and excellent abrasion resistance.

BRIEF DESCRIPTION OF DRAWINGS

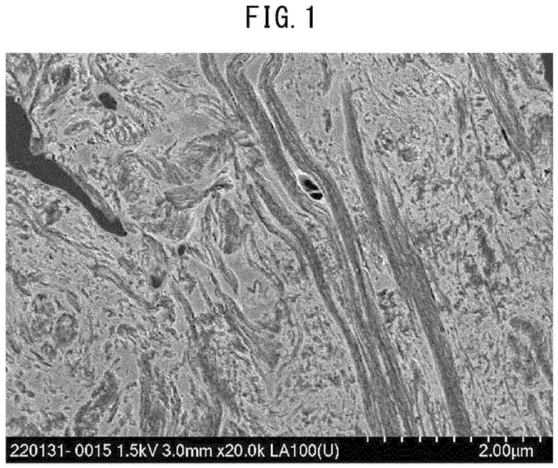

Fig. 1 is an observation image of a cross-section of the powder obtained in Example 10, taken by a scanning electron microscope.

DESCRIPTION OF EMBODIMENTS

An embodiment of the invention (hereunder referred to as "the embodiment") will now be explained as an example, with the understanding that the invention is not in any way limited to this embodiment. Unless otherwise specified, the property values mentioned throughout the present disclosure are values measured by the methods described herein under "Examples" or methods known to be equivalent to them by those skilled in the art.

<Rubber composition>

One aspect of the disclosure provides a rubber composition that includes cellulose nanofibers, a first rubber component which is a liquid rubber, and a surfactant, wherein the surfactant is a nonionic surfactant. Cellulose nanofibers are essentially hydrophilic due to their hydroxyl groups, while rubber is essentially hydrophobic, making it normally difficult to uniformly disperse cellulose nanofibers in rubber. Although the dispersibility can be increased to some extent using a dispersing agent, for example, from the viewpoint of avoiding reduction in the physical properties of the molded article it is preferable to produce a uniform dispersion of the cellulose nanofibers in the rubber while minimizing the need for additives. As a result of much research on this issue, the present inventors have found that if cellulose nanofibers are dispersed in a specific type of rubber having a flow property at a predetermined temperature to prepare a rubber composition, and the rubber composition is then kneaded with rubber while in the form of a master batch for rubber to obtain a rubber composite, it is possible to form a cured rubber product without impairment of the physical properties expected for the original rubber, and satisfactorily exhibiting the reinforcing effect of the cellulose nanofibers. The rubber composition of the present embodiment can form a cured rubber product with the cellulose nanofibers satisfactorily dispersed in rubber and exhibiting satisfactory properties (especially elastic modulus and hardness), and the cured rubber product can form a molded article with the cellulose nanofibers satisfactorily dispersed in the rubber and exhibiting an excellent elastic modulus and excellent abrasion resistance.

Preferred examples for each of the components in the rubber composition of the embodiment will now be described.

<Cellulose nanofibers>

The starting material for the cellulose nanofibers may be natural cellulose or regenerated cellulose. Natural cellulose includes wood pulp obtained from wood sources (broadleaf trees or conifers), nonwood pulp obtained from non-wood sources (cotton, bamboo, hemp, bagasse, kenaf, cotton linter, sisal and straw), and cellulose aggregates obtained from sources such as animals (such as sea squirts) and algae, and cellulose aggregates produced by microbes (such as acetic acid bacteria). Regenerated cellulose for use may be regenerated cellulose fibers (such as viscose, cupra and Tencel), cellulose derivative fibers, and superfine yarn of regenerated cellulose or cellulose derivatives, obtained by electrospinning methods.

According to one aspect, the cellulose nanofibers may be microcellulose fibers obtained by treating pulp with hot water, for example, at 100°C or higher, hydrolyzing the hemicellulose portion to weaken it, and then mechanically defibrating by a pulverizing method using a high-pressure homogenizer, microfluidizer, ball mill, disk mill or mixer (such as a homomixer). According to one aspect, the cellulose nanofibers have a number-average fiber diameter of 1 nm to 1000 nm. The cellulose nanofibers may be chemically modified as described below, but they are preferably not chemically modified from the viewpoint of exhibiting a reinforcing effect as a filler. For example, cellulose nanofibers that have been defibrated by chemical oxidizing treatment with 2,2,6,6-tetramethylpiperidine-1-oxyl (TEMPO) phosphoric acid ester, for example, tend to have low heat resistance due to the ionic groups (such as carboxy groups) introduced into the cellulose nanofibers, and also tend to have small fiber diameters after defibrating. From the viewpoint of exhibiting a reinforcing effect as a filler, it is more advantageous for the cellulose nanofibers to be defibrated by mechanical defibrating alone (that is, without chemical defibrating such as oxidation). According to a preferred aspect, therefore, the cellulose nanofibers do not have ionic groups. As used herein, the phrase "cellulose nanofibers do not have ionic groups" means that the amount of ionic groups is 0.1 mmol/g or lower as measured by conductometric titration.

A slurry can be prepared by dispersing cellulose fiber in a liquid medium with the dispersion being carried out using a high-pressure homogenizer, microfluidizer, ball mill, disk mill or mixer (such as a homomixer), and for example, a defibration product can be obtained as the product of the slurry preparation step of the present disclosure. The liquid medium in the slurry may optionally include one or a combination of two or more other liquid media (such as organic solvents) in addition to water. Examples of organic solvents to be used include commonly used water-miscible organic solvents, such as alcohols with boiling points of 50°C to 170°C (for example, methanol, ethanol, n-propanol, i-propanol, n-butanol, i-butanol, s-butanol and t-butanol); ethers (for example, propyleneglycol monomethyl ether, 1,2-dimethoxyethane, diisopropyl ether, tetrahydrofuran and 1,4-dioxane); carboxylic acids (for example, formic acid, acetic acid and lactic acid); esters (for example, ethyl acetate and vinyl acetate); ketones (for example, acetone, methyl ethyl ketone, methyl isobutyl ketone, cyclopentanone and cyclohexanone); and nitrogen-containing solvents (such as dimethylformamide, dimethyl acetamide and acetonitrile). According to a typical aspect, the liquid medium in the slurry consists essentially of water.

Cellulose starting materials contain alkali-soluble components and sulfuric acid-insoluble components (such as lignin), and the alkali-soluble portion and the sulfuric acid-insoluble components may be reduced by carrying out refining steps such as delignification by digestion processing, and bleaching steps. However, since refining steps such as delignification by digestion processing, and bleaching steps, cut the molecular chains of the cellulose, altering its weight-average molecular weight and number-average molecular weight, it is preferred for the refining steps and bleaching steps for the cellulose starting material to be controlled so that the weight-average molecular weight and the weight-average molecular weight/number-average molecular weight ratio of the cellulose nanofibers do not deviate from the proper ranges.

Since refining steps such as delignification by digestion processing and bleaching steps lower the molecular weight of the cellulose molecules, this raises the concern that these steps may lead to low molecularization of the cellulose nanofibers and degeneration of the cellulose starting material, which increases the abundance ratio of the alkali-soluble portion. Since the alkali-soluble portion has poor heat resistance, refining and bleaching of the cellulose starting material is preferably controlled so that the amount of alkali-soluble components in the cellulose starting material is less than a certain value.

According to one aspect, the number-average fiber diameters of the cellulose nanofibers are preferably 2 to 1000 nm from the viewpoint of obtaining a satisfactory improving effect on the physical properties by the cellulose nanofibers. The number-average fiber diameter of the cellulose nanofibers is more preferably 4 nm or greater, 5 nm or greater, 10 nm or greater, 15 nm or greater or 20 nm or greater, and more preferably 500 nm or smaller, 450 nm or smaller, 400 nm or smaller, 350 nm or smaller, 300 nm or smaller or 250 nm or smaller.

The mean fiber length (L)/fiber diameter (D) ratio of the cellulose nanofibers is preferably 30 or greater, 50 or greater, 80 or greater, 100 or greater, 120 or greater or 150 or greater, from the viewpoint of satisfactorily improving the mechanical properties of the rubber composite containing the cellulose nanofibers, while using a small amount of cellulose nanofibers. The upper limit is not particularly restricted but is preferably 5000 or lower from the viewpoint of handleability.

For the present disclosure, the fiber length, fiber diameter and the L/D ratio of the cellulose nanofibers are determined by preparing aqueous dispersions of the cellulose nanofibers, each aqueous dispersion being dispersed using a high-shear homogenizer (for example, an "Excel ED-7 Autohomogenizer", trade name of Nippon Seiki Co., Ltd.), under processing conditions with a rotational speed of 15,000 rpm × 5 minutes, diluting the aqueous dispersion with purified water to 0.1 to 0.5 mass%, casting this onto mica, and using each air-dried product as a measuring sample for measurement with a scanning electron microscope (SEM) or atomic force microscope (AFM). Specifically, the length (L) and diameter (D) of 100 randomly selected cellulose nanofibers are measured in an observation field with the magnification adjusted so as to observe at least 100 cellulose nanofibers, and the ratio (L/D) is calculated. The number-average value for the fiber length (L), the number-average value for the fiber diameter (D) and the number-average value for the ratio (L/D) is calculated for the cellulose nanofibers.

Alternatively, the fiber length, fiber diameter and L/D ratio of cellulose nanofibers to be included in a powder, rubber composition, rubber master batch or rubber composite can be confirmed by measurement of a sample of the same, using the measuring method described above.

Yet alternatively, the fiber length, fiber diameter and L/D ratio of the cellulose nanofibers to be included in a powder, rubber composition, rubber master batch or rubber composite can be confirmed by dissolving the polymer component in an organic or inorganic solvent capable of dissolving the polymer component, separating the cellulose nanofibers, thoroughly rinsing them with the solvent, and then replacing the solvent with purified water to form an aqueous dispersion, diluting the cellulose nanofiber concentration to 0.1 to 0.5 mass% with purified water, casting the dispersion onto mica, and performing measurement by the measuring method described above using the air-dried product as the measuring sample. The cellulose nanofibers are measured using 100 or more randomly selected fibers.

The degree of crystallinity of the cellulose nanofibers is preferably 55% or greater. If the degree of crystallinity is within this range, the mechanical properties (strength and dimensional stability) of the cellulose itself will be high, so that when the cellulose nanofibers are dispersed in rubber, the strength and dimensional stability of the rubber composite will also tend to be high. A more preferred lower limit for the degree of crystallinity is 60%, preferably 70% and most preferably 80%. The upper limit for the degree of crystallinity of the cellulose nanofibers is not particularly restricted, a higher degree being preferred, but from the viewpoint of productivity the preferred upper limit is 99%.

The alkali-soluble polysaccharides such as hemicellulose and acid-insoluble components such as lignin are present between plant-derived cellulose nanofiber microfibrils and between microfibril bundles. Hemicellulose is a polysaccharide composed of sugars such as mannan and xylan, and it plays a role in hydrogen bonding with cellulose and binding together microfibrils. Lignin is a compound class with aromatic rings that is known to participate in covalent bonding with hemicellulose in plant cell walls. A large residue of impurities such as lignin in cellulose nanofibers may result in discoloration by heating during working, and therefore the degree of crystallinity of the cellulose nanofibers is preferably within the ranges specified above from the viewpoint of reducing discoloration of the rubber composite during extrusion or during shaping.

When the cellulose is type I cellulose crystals (derived from natural cellulose), the degree of crystallinity referred to here is that determined by the following formula, from the diffraction pattern (2θ/deg. = 10 to 30) obtained by measurement of the sample by wide-angle X-ray diffraction, based on the Segal method.

Degree of crystallinity (%) = ([Diffraction intensity from (200) plane with 2θ/deg. = 22.5] - [diffraction intensity from amorphous matter with 2θ/deg. = 18])/[diffraction intensity from (200) plane with 2θ/deg. = 22.5] × 100

When the cellulose is type II cellulose crystals (derived from regenerated cellulose), the degree of crystallinity is determined by the following formula, from the absolute peak intensity h0 at 2θ = 12.6° attributed to the (110) plane peak of the type II cellulose crystal, and the peak intensity h1 from the baseline for the plane spacing, in wide-angle X-ray diffraction.

$$\text{Degree of crystallinity (\%)} = h1/h0 \times 100$$

The known crystalline forms of cellulose include type I, type II, type III and type IV, among which type I and type II are most commonly used, whereas type III and type IV are not commonly used on an industrial scale but have been obtained on a laboratory scale. The cellulose nanofibers of the disclosure are preferably cellulose nanofibers containing type I cellulose crystals or type II cellulose crystals, for relatively high mobility in terms of structure and to obtain a molded article with a lower coefficient of linear expansion and more excellent strength and elongation when subjected to stretching or bending deformation, by dispersion of the cellulose nanofibers in the rubber, and more preferably the cellulose nanofibers contain type I cellulose crystals and have a degree of crystallinity of 55% or higher.

The degree of polymerization of the cellulose nanofibers is preferably 100 or greater, more preferably 150 or greater, even more preferably 200 or greater, yet more preferably 300 or greater, even yet more preferably 400 or greater, and most preferably 450 or greater, and preferably 3500 or lower, more preferably 3300 or lower, even more preferably 3200 or lower, yet more preferably 3100 or lower and most preferably 3000 or lower.

The degree of polymerization of the cellulose nanofibers is preferably within this range from the viewpoint of workability and mechanical properties. The degree of polymerization is preferably not too high from the viewpoint of workability, and it is preferably not too low from the viewpoint of exhibiting mechanical properties.

The degree of polymerization of the cellulose nanofibers is the mean polymerization degree measured by a reduced relative viscosity method using a copper-ethylenediamine solution, as described in Verification Test (3) of "Japanese Pharmacopeia, 15th Edition Reference Manual (Hirokawa Shoten)".

According to one aspect, the weight-average molecular weight (Mw) of the cellulose nanofibers is 100,000 or greater and preferably 200,000 or greater. The ratio (Mw/Mn) of the weight-average molecular weight and number-average molecular weight (Mn) is 6 or lower and preferably 5.4 or lower. A higher weight-average molecular weight means a lower number of terminal groups of the cellulose molecules. Since the ratio (Mw/Mn) of the weight-average molecular weight and number-average molecular weight represents the width of the molecular weight distribution, a smaller Mw/Mn means a lower number of ends of cellulose molecules. Since the ends of the cellulose molecules are origins for thermal decomposition, it is not sufficient for the cellulose molecules of the cellulose nanofibers to merely have high weight-average molecular weight, but when a high weight-average molecular weight is combined with a more narrow width of the molecular weight distribution, it is possible to obtain especially high heat resistance for the cellulose nanofibers, and for a rubber composition comprising the cellulose nanofibers and rubber. The weight-average molecular weight (Mw) of the cellulose nanofibers may be 600,000 or lower, or 500,000 or lower, for example, from the viewpoint of greater availability of the cellulose starting material. The ratio (Mw/Mn) of the weight-average molecular weight and number-average molecular weight (Mn) may be 1.5 or greater or 2 or greater, for example from the viewpoint of easier production of the cellulose nanofibers. The Mw can be controlled to within this range by selecting a cellulose starting material having the corresponding Mw, or by carrying out appropriate physical treatment and/or chemical treatment of the cellulose starting material. The Mw/Mn ratio can also be controlled to within this range by selecting a cellulose starting material having the corresponding Mw/Mn ratio, or by carrying out appropriate physical treatment and/or chemical treatment of the cellulose starting material. The Mw and Mw/Mn of the cellulose starting material may be in the ranges specified above according to one aspect. Examples of physical treatment for control of both the Mw and Mw/Mn include physical treatment by application of mechanical force, such as dry grinding or wet grinding with a microfluidizer, ball mill or disk mill, for example, or impacting, shearing, sliding or abrasion with a crusher, homomixer, high-pressure homogenizer or ultrasonic device, for example, while examples of chemical treatment include digestion, bleaching, acid treatment and regenerated cellulose treatment.

The weight-average molecular weight and number-average molecular weight of the cellulose nanofibers referred to here are the values determined after dissolving the cellulose nanofibers in lithium chloride-added N,N-dimethylacetamide, and then performing gel permeation chromatography with N,N-dimethylacetamide as the solvent.

The method of controlling the degree of polymerization (i.e. mean polymerization degree) or molecular weight of the cellulose nanofibers may be hydrolysis. Hydrolysis promotes depolymerization of amorphous cellulose inside the cellulose nanofibers and lowers the mean polymerization degree. Simultaneously, hydrolysis also results in removal of impurities such as hemicellulose and lignin in addition to the aforementioned amorphous cellulose, so that the interior of the fiber material becomes porous.

The method of hydrolysis is not particularly restricted and may be acid hydrolysis, alkali hydrolysis, hot water decomposition, steam explosion, microwave decomposition or the like. Such methods may be used alone or in combinations of two or more. In a method of acid hydrolysis, for example, the cellulose starting material is $\alpha$-cellulose obtained as pulp from a fibrous plant, which is dispersed in an aqueous medium, and then a suitable amount of a proton acid, carboxylic acid, Lewis acid, heteropolyacid or the like is added to the dispersion and the mixture is heated while stirring, thereby allowing easy control of the mean polymerization degree. The reaction conditions such as temperature, pressure and time will differ depending on the type of cellulose, the cellulose concentration, the acid type and the acid concentration, and they are appropriately adjusted so as to obtain the desired mean polymerization degree. For example, a water-soluble mineral acid solution at up to 2 mass% may be used for treatment of cellulose nanofibers for 10 minutes or longer under conditions of 100°C or higher under pressure. Under such conditions, the catalyst component, such as an acid, penetrates to the cellulose nanofiber interiors and promotes hydrolysis, allowing a lower amount of catalyst component usage and easier subsequent refining. During hydrolysis, the dispersion of the cellulose material may contain, in addition to water, also a small amount of an organic solvent in a range that does not interfere with the effect of the invention.

Alkali-soluble polysaccharides in the cellulose nanofibers include $\beta$-cellulose and $\gamma$-cellulose, in addition to hemicellulose. Alkali-soluble polysaccharides are understood by those skilled in the art to consist of the components that are obtained as the alkali-soluble portion of holocellulose (that is, the components other than $\alpha$-cellulose in the holocellulose), upon solvent extraction and chlorine treatment of a plant (such as wood). Since alkali-soluble polysaccharides consist of hydroxyl group-containing polysaccharides with poor heat resistance, which can lead to inconveniences such as decomposition when subjected to heat, or yellowing due to heat aging, or reduced strength of the cellulose nanofibers, it is preferred to have a lower alkali-soluble polysaccharide content in the cellulose nanofibers.

According to one aspect, the average content of alkali-soluble polysaccharides in the cellulose nanofibers is preferably 20 mass% or lower, 18 mass% or lower, 15 mass% or lower or 12 mass% or lower with respect to 100 mass% of the cellulose nanofibers, from the viewpoint of obtaining satisfactory dispersibility for the cellulose nanofibers. The content may also be 1 mass% or greater, 2 mass% or greater or 3 mass% or greater from the viewpoint of facilitating production of the cellulose nanofibers.

The average content of alkali-soluble polysaccharides can be determined by the method described in non-patent literature (Mokushitsu Kagaku Jikken Manual, ed. The Japan Wood Research Society, pp.92-97, 2000), subtracting the $\alpha$-cellulose content from the holocellulose content (Wise method). In the technical field this method is considered to be a method of measuring hemicellulose content. The alkali-soluble polysaccharide content is calculated 3 times for each sample, and the number average for the calculated alkali-soluble polysaccharide contents is recorded as the average alkali-soluble polysaccharide content.

According to one aspect, the average content of acid-insoluble components in the cellulose nanofibers is preferably 10 mass% or lower, 5 mass% or lower or 3 mass% or lower with respect to 100 mass% of the cellulose nanofibers, from the viewpoint of avoiding reduction in heat resistance and resulting discoloration of the cellulose nanofibers. The content may also be 0.1 mass% or greater, 0.2 mass% or greater or 0.3 mass% or greater from the viewpoint of facilitating production of the cellulose nanofibers.

The average content of the acid-insoluble component is quantified using the Klason method, described in non-patent literature (Mokushitsu Kagaku Jikken Manual, ed. The Japan Wood Research Society, pp.92-97, 2000). In the technical field this method is considered to be a method of measuring lignin content. The sample is stirred in a sulfuric acid solution to dissolve the cellulose and hemicellulose, and then filtered with glass fiber filter paper, and the obtained residue is used as the acid-insoluble component. The acid-insoluble component content is calculated from the weight of the acid-insoluble component, and the average of the acid-insoluble component content calculated for three samples is recorded as the average content of the acid-insoluble component.

The thermal decomposition initiation temperature ($T_D$) of the cellulose nanofibers, according to one aspect, is 270°C or higher, preferably 275°C or higher, more preferably 280°C or higher and even more preferably 285°C or higher, from the viewpoint of allowing the desired heat resistance and mechanical strength to be exhibited for on-vehicle purposes. While a higher thermal decomposition initiation temperature is preferred, it is also 320°C or lower or 300°C or lower, from the viewpoint of easier production of the cellulose nanofibers.

For the purpose of the disclosure, the $T_D$ is the value determined from a graph of thermogravimetry (TG) analysis where the abscissa is temperature and the ordinate is weight retention %. Starting from the weight of cellulose nanofibers at 150°C (with essentially all of the moisture content removed) (0 wt% weight reduction) and increasing the temperature, a straight line is obtained running through the temperature at 1 wt% weight reduction ($T_{1\%}$) and the temperature at 2 wt% weight reduction ($T_{2\%}$). The temperature at the point of intersection between this straight line and a horizontal (baseline) running through the origin at weight reduction 0 wt%, is defined as $T_D$.

The 1% weight reduction temperature ($T_{1\%}$) is the temperature at 1 wt% weight reduction with the 150°C weight as the origin, after continuous temperature increase by the method for $T_D$ described above.

The 250°C weight loss ($T_{250°C}$) of the cellulose nanofibers is the weight loss by TG analysis when the cellulose nanofibers have been stored for 2 hours at 250°C under a nitrogen flow.

(Chemical modification)

The cellulose nanofibers may be chemically modified cellulose nanofibers. The cellulose nanofibers may be chemically modified beforehand, at the stage of the starting pulp or linter, during defibration treatment or after defibration treatment, or they may be chemically modified either during or after the slurry preparation step, or during or after the drying (granulation) step.

The modifying agent for the cellulose nanofibers used may be a compound that reacts with the hydroxyl groups of cellulose, and it may be an esterifying agent, an etherifying agent or a silylating agent. A modifying agent having polar groups, such as a carboxylic acid or phosphoric acid ester, will introduce ionic groups (such as carboxy groups) into the cellulose nanofibers, tending to lower the heat resistance and also tending to reduce the fiber diameters after defibration, and therefore such a modifying agent is preferably not used from the viewpoint of exhibiting a reinforcing effect as a filler. According to a preferred aspect, the chemical modification is acylation, and especially acetylation, using an esterifying agent. Preferred esterifying agents are acid halides, acid anhydrides, vinyl carboxylate esters and carboxylic acids.

An acid halide may be one or more selected from the group consisting of compounds represented by the following formula.

$$R^1\text{-}C(=O)\text{-}X$$

(In the formula, $R^1$ represents an alkyl group of 1 to 24 carbon atoms, an alkenyl group of 2 to 24 carbon atoms, a cycloalkyl group of 3 to 24 carbon atoms or an aryl group of 6 to 24 carbon atoms, and X is Cl, Br or I.)

Specific examples of acid halides include acetyl chloride, acetyl bromide, acetyl iodide, propionyl chloride, propionyl bromide, propionyl iodide, butyryl chloride, butyryl bromide, butyryl iodide, benzoyl chloride, benzoyl bromide and benzoyl iodide, with no limitation to these. Acid chlorides are preferably used among these from the viewpoint of reactivity and handleability. For reaction of an acid halide, one or more alkaline compounds may also be added to neutralize the acidic by-products while simultaneously exhibiting catalytic action. Specific examples of alkaline compounds include: tertiary amine compounds such as triethylamine and trimethylamine; and nitrogen-containing aromatic compounds such as pyridine and dimethylaminopyridine; with no limitation to these.

Any suitable acid anhydride may be used as an acid anhydride. Examples include:

anhydrides of saturated aliphatic monocarboxylic acids such as acetic acid, propionic acid, (iso)butyric acid and valeric acid;
anhydrides of unsaturated aliphatic monocarboxylic acids such as (meth)acrylic acid and oleic acid;
anhydrides of alicyclic monocarboxylic acids such as cyclohexanecarboxylic acid and tetrahydrobenzoic acid;
anhydrides of aromatic monocarboxylic acids such as benzoic acid and 4-methylbenzoic acid;
dibasic carboxylic anhydrides, for example: anhydrides of saturated aliphatic dicarboxylic acids such as succinic acid and adipic acid;
unsaturated aliphatic dicarboxylic anhydrides such as maleic anhydride and itaconic anhydride;
alicyclic dicarboxylic anhydrides such as 1-cyclohexene-1,2-dicarboxylic anhydride, hexahydrophthalic anhydride and methyltetrahydrophthalic anhydride; and
aromatic dicarboxylic anhydrides such as phthalic anhydride and naphthalic anhydride; and
tribasic or greater polybasic carboxylic anhydrides, for example: polycarboxylic acid (anhydrides) such as trimellitic anhydride and pyromellitic anhydride.

The catalyst for reaction of an acid anhydride may be one or more types of an acidic compound such as sulfuric acid, hydrochloric acid or phosphoric acid, or a Lewis acid (such as a Lewis acid compound represented by MYn where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, $OCOCF_3$, $ClO_4$, $SbF_6$, $PF_6$ or $OSO_2CF_3$(OTf)), or an alkaline compound such as triethylamine or pyridine.

Preferred vinyl carboxylate esters are vinyl carboxylate esters represented by the following formula:

R-COO-CH=CH$_2$

{where R is an alkyl group of 1 to 24 carbon atoms, an alkenyl group of 2 to 24 carbon atoms, a cycloalkyl group of 3 to 16 carbon atoms or an aryl group of 6 to 24 carbon atoms}. Vinyl carboxylate esters are more preferably one or more selected from the group consisting of vinyl acetate, vinyl propionate, vinyl butyrate, vinyl caproate, vinyl cyclohexanecarboxylate, vinyl caprylate, vinyl caprate, vinyl laurate, vinyl myristate, vinyl palmitate, vinyl stearate, vinyl pivalate, vinyl octylate, divinyl adipate, vinyl methacrylate, vinyl crotonate, vinyl octylate, vinyl benzoate and vinyl cinnamate. For esterification reaction with a vinyl carboxylate ester, one or more catalysts selected from the group consisting of alkali metal hydroxides, alkaline earth metal hydroxides, alkali metal carbonates, alkaline earth metal carbonates, alkali metal hydrogencarbonate salts, primary to tertiary amines, quaternary ammonium salts, imidazoles and their derivatives, pyridines and their derivatives, and alkoxides, may be added.

Alkali metal hydroxides and alkaline earth metal hydroxides include sodium hydroxide, potassium hydroxide, lithium hydroxide, calcium hydroxide and barium hydroxide. Alkali metal carbonates, alkaline earth metal carbonates and alkali metal hydrogencarbonate salts include lithium carbonate, sodium carbonate, potassium carbonate, cesium carbonate, magnesium carbonate, calcium carbonate, barium carbonate, lithium hydrogencarbonate, sodium hydrogencarbonate, potassium hydrogencarbonate and cesium hydrogencarbonate.

Primary to tertiary amines are primary amines, secondary amines and tertiary amines, specific examples of which include ethylenediamine, diethylamine, proline, N,N,N',N'-tetramethylethylenediamine, N,N,N',N'-tetramethyl-1,3-propanediamine, N,N,N',N'-tetramethyl-1,6-hexanediamine, tris(3-dimethylaminopropyl)amine, N,N-dimethylcyclohexylamine and triethylamine.

Imidazole and its derivatives include 1-methylimidazole, 3-aminopropylimidazole and carbonyldiimidazole.

Pyridine and its derivatives include N,N-dimethyl-4-aminopyridine and picoline.

Alkoxides include sodium methoxide, sodium ethoxide and potassium-t-butoxide.

Carboxylic acids include one or more selected from the group consisting of compounds represented by the following formula.

R-COOH

(In the formula, R represents an alkyl group of 1 to 16 carbon atoms, an alkenyl group of 2 to 16 carbon atoms, a cycloalkyl group of 3 to 16 carbon atoms or an aryl group of 6 to 16 carbon atoms.)

Specific examples of carboxylic acids include one or more selected from the group consisting of acetic acid, propionic acid, butyric acid, caproic acid, cyclohexanecarboxylic acid, caprylic acid, capric acid, lauric acid, myristic acid, palmitic acid, stearic acid, pivalic acid, methacrylic acid, crotonic acid, octylic acid, benzoic acid and cinnamic acid.

Preferred among these carboxylic acids are one or more selected from the group consisting of acetic acid, propionic acid and butyric acid, and especially acetic acid, from the viewpoint of reaction efficiency.

The catalyst for reaction of a carboxylic acid may be one or more types of an acidic compound such as sulfuric acid, hydrochloric acid or phosphoric acid, or a Lewis acid (such as a Lewis acid compound represented by MY$_n$ where M represents a metalloid element such as B, As or Ge, a base metal element such as Al, Bi or In, a transition metal element such as Ti, Zn or Cu, or a lanthanoid element, n represents an integer corresponding to the valence of M and is 2 or 3, and Y represents a halogen atom, OAc, OCOCF$_3$, ClO$_4$, SbF$_6$, PF$_6$ or OSO$_2$CF$_3$(OTf)), or an alkaline compound such as triethylamine or pyridine.

Particularly preferred among these esterification reactants are one or more selected from the group consisting of acetic anhydride, propionic anhydride, butyric anhydride, vinyl acetate, vinyl propionate, vinyl butyrate and acetic acid, among which acetic anhydride and vinyl acetate are especially preferred from the viewpoint of reaction efficiency.

When the cellulose nanofibers are chemically modified (by hydrophobizing such as acylation, for example), the dispersibility of the cellulose nanofibers in the rubber will tend to be satisfactory, but the cellulose nanofibers of the disclosure can also exhibit satisfactory dispersibility in rubber even when they are unsubstituted or low-substituted.

According to one aspect, the degree of substitution of the cellulose nanofibers is 0 (i.e. they are unsubstituted).

According to another aspect, the degree of acyl substitution (DS) of the cellulose nanofibers is greater than 0, 0.1 or greater, 0.2 or greater, 0.25 or greater, 0.3 or greater or 0.5 or greater, from the viewpoint of obtaining chemically modified cellulose nanofibers with a high thermal decomposition initiation temperature. If unmodified cellulose backbones remain in the esterified cellulose nanofibers, then it will be possible to obtain esterified cellulose nanofibers exhibiting high tensile strength and dimensional stability provided by the cellulose and a high thermal decomposition initiation temperature provided by the chemical modification, and in this regard the degree of acyl substitution (DS) of the cellulose nanofibers may be 1.2 or lower, 1.0 or lower, 0.8 or lower, 0.7 or lower, 0.6 or lower or 0.5 or lower.

When the modifying groups on the chemically modified cellulose nanofibers are acyl groups, the degree of acyl substitution (DS) can be calculated based on the peak intensity ratio between the acyl group-derived peak and the cellulose backbone-derived peak, in the attenuated total reflection (ATR) infrared absorption spectrum of the esterified cellulose nanofibers. The peak of the absorption band for C=O based on acyl groups appears at 1730 cm$^{-1}$, while the peak of the absorption band for C-O based on the cellulose backbone chain appears at 1030 cm$^{-1}$. The DS of esterified cellulose nanofibers can be calculated using the calibration curve:

$$\text{Degree of substitution DS} = 4.13 \times \text{IR index (1030)},$$

derived from a correlation graph drawn between DS obtained from solid NMR measurement of the esterified cellulose nanofibers described below, and the modification rate (IR index 1030), defined by the ratio of the peak intensity of the absorption band for C=O based on acyl groups with respect to the peak intensity of the absorption band for C-O of the cellulose backbone chain.

The content of cellulose nanofibers in the rubber composition is preferably 0.5 mass% or greater, 1 mass% or greater or 3 mass% or greater from the viewpoint of obtaining a satisfactory reinforcing effect by the cellulose nanofibers, and is preferably 80 mass% or lower, 60 mass% or lower, 33 mass% or lower, 30 mass% or lower, 20 mass% or lower or 10 mass% or lower, from the viewpoint of obtaining a rubber molded article with satisfactory rubber elasticity.

<First rubber component (liquid rubber)>

For the purpose of the disclosure, "liquid rubber" is a substance having a flow property at 23°C and forming a rubber elastomer by crosslinking (more specifically, vulcanization) and/or chain extension. That is, according to one aspect the liquid rubber is uncured. The "flow property" means, according to one aspect, that when the liquid rubber that has been dissolved in cyclohexane is placed in a vial with dimensions of 21 mm torso diameter × 50 mm full length at 23°C and then dried, causing the liquid rubber to fill the vial up to a height of 1 mm, and the vial is then closed shut, vertically inverted and allowed to stand for 24 hours, the substance can be observed to move at least 0.1 mm in the height direction. The liquid rubber may be a common rubber monomer composition, and it preferably has a relatively low molecular weight from the viewpoint of easier handleability and obtaining satisfactory dispersibility of the cellulose nanofibers. According to one aspect, the liquid rubber is in liquid form with a number-average molecular weight (Mn) of 80,000 or lower. For the purpose of the disclosure, the molecular weight and molecular weight distribution of the rubber component are values obtained by measuring the chromatogram by gel permeation chromatography with 3 linked columns packed with polystyrene gel, and performing calculation with a calibration curve using standard polystyrene. The solvent used is tetrahydrofuran.

When the rubber composition is cured to obtain a cured rubber product, the liquid rubber is preferably vulcanized during curing from the viewpoint of improving the mechanical properties of the cured rubber product.

The number-average molecular weight of the liquid rubber (Mn) is preferably 1,000 or higher, 1,500 or higher or 2,000 or higher from the viewpoint of obtaining a rubber composition with an excellent storage modulus, and excellent dispersibility into the matrix component in the rubber composite, and preferably 80,000 or lower, 50,000 or lower, 40,000 or lower, 30,000 or lower or 10,000 or lower from the viewpoint of exhibiting a high flow property suited for satisfactory dispersion of the cellulose nanofibers in the liquid rubber, and from the viewpoint of avoiding excessive hardening of the liquid rubber after curing and obtaining satisfactory rubber elasticity.

The weight-average molecular weight (Mw) of the liquid rubber is preferably 1,000 or higher, 2,000 or higher or 4,000 or higher from the viewpoint of obtaining a rubber composition with an excellent storage modulus, and excellent dispersibility into the matrix component in the rubber composite, and preferably 240,000 or lower, 150,000 or lower or 30,000 or lower from the viewpoint of exhibiting a high flow property suited for satisfactory dispersion of the cellulose nanofibers in the liquid rubber, and from the viewpoint of avoiding excessive hardening of the liquid rubber after curing and obtaining satisfactory rubber elasticity.

The ratio of the number-average molecular weight (Mn) and the weight-average molecular weight (Mw) (Mw/Mn) of the liquid rubber is preferably 1.5 or greater, 1.8 or greater or 2.0 or greater from the viewpoint of allowing high levels of multiple properties as a rubber molded article to be obtained (which are, according to one aspect, high levels of storage modulus and rubber elasticity for the rubber molded article) by producing some degree of variation in the molecular weight, and preferably 10 or lower, 8 or lower or 5 or lower from the viewpoint of stably obtaining the desired physical properties for a rubber molded article without excessively large variation in molecular weight.

The liquid rubber may be a conjugated diene-based polymer, a non-conjugated diene-based polymer, or a hydrogenated product of the same. The polymer or its hydrogenated product may also be an oligomer. According to one aspect, the liquid rubber may have reactive groups at both ends (for example, one or more selected from the group consisting of hydroxyl, carboxy, isocyanato, thio, amino and halo groups), in which case it may be bifunctional. The reactive groups contribute to crosslinking and/or chain extension of the liquid rubber.

[Conjugated diene-based polymer]

The conjugated diene-based polymer may be a homopolymer or a copolymer of two or more conjugated diene monomers or a copolymer of a conjugated diene monomer and another monomer. The copolymer may be either random or block.

Conjugated diene monomers include 1,3-butadiene, isoprene, 2,3-dimethyl-1,3-butadiene, 1,3-pentadiene, 3-methyl-1,3-pentadiene, 1,3-heptadiene and 1,3-hexadiene, and one of these or a combination of two or more may be used.

According to one aspect, the conjugated diene-based polymer is a copolymer of a conjugated diene monomer and an aromatic vinyl monomer.

Aromatic vinyl monomers are not particularly restricted so long as they are monomers that are copolymerizable with conjugated diene monomers, and examples include styrene, *m*- or *p*-methylstyrene, $\alpha$-methylstyrene, ethylstyrene, p-tert-butylstyrene, vinylethylbenzene, vinylxylene, vinylnaphthalene, diphenylethylene and divinylbenzene, among which any one or combination of two or more may be used. Styrene is preferred from the viewpoint of molding workability of the rubber composite and impact resistance of the molded article.

Random copolymers include butadiene-isoprene random copolymer, butadiene-styrene random copolymer, isoprene-styrene random copolymer and butadiene-isoprene-styrene random copolymer. The compositional distribution of each monomer in the copolymer chain may be a completely random copolymer having a nearly statistically random composition, or a tapered (gradient) random copolymer having a gradient in the compositional distribution. A composition with a conjugated diene-based polymer bond form, i.e. 1,4-bonds or 1,2-bonds, may have uniform or different molecules.

A block copolymer may be a copolymer composed of two or more blocks. An example is a block copolymer in which block A as an aromatic vinyl monomer and block B as a conjugated diene monomer block and/or an aromatic vinyl monomer and conjugated diene monomer copolymer block, form the structure A-B, A-B-A or A-B-A-B. There is no essential need for distinct block borders, and for example, when block B is a copolymer of an aromatic vinyl monomer and a conjugated diene monomer, the aromatic vinyl monomer in block B may be distributed in a uniform or tapered manner. Block B may also have multiple regions including portions where the aromatic vinyl monomer is uniformly distributed and/or portions where it is distributed in a tapered manner. Block B may also have multiple segments with different aromatic vinyl monomer contents. When multiple blocks for each of block A and block B are present in a copolymer, their molecular weights and compositions may be the same or different.

The block copolymer may also be a mixture of two or more different types with differences in any one from among the bond form, the molecular weight, the aromatic vinyl compound type, the conjugated diene compound type, the 1,2-vinyl group content or total 1,2-vinyl group content and 3,4-vinyl group content, the aromatic vinyl compound content and the hydrogenation rate.

The amount of vinyl bonds (for example, butadiene 1,2- or 3,4-bonds) among the conjugated diene bond units in the conjugated diene-based polymer is preferably 10 mol% to 75 mol% or 13 mol% to 65 mol%.

The amount of vinyl bonds (for example, butadiene 1,2-bonds) among the conjugated diene bond units can be determined by $^{13}$C-NMR (quantitative mode). Specifically, integration of the peak area obtained by $^{13}$C-NMR gives a value proportional to the amount of carbon in each structural unit, which can then be converted to mass% for each structural unit.

Styrene 145 to 147 ppm
Vinyl 110 to 116 ppm
Diene (*cis*) 24 to 28 ppm
Diene (*trans*) 29 to 33 ppm

For a copolymer of a conjugated diene monomer and an aromatic vinyl monomer, the amount of aromatic vinyl monomer bonded to the conjugated diene monomer (also referred to hereunder simply as "aromatic vinyl bond amount") is preferably 5.0 mass% to 70 mass% or 10 mass% to 50 mass%, with respect to the total mass of the conjugated diene-based polymer. The aromatic vinyl bond amount can be calculated from the ultraviolet absorbance of phenyl groups, and this can be used to further calculate the conjugated diene binding amount.

A hydrogenated conjugated diene-based polymer may be a hydrogenated form of any of the conjugated diene-based polymers mentioned above, and for example, it may be a hydrogenated butadiene homopolymer, isoprene homopolymer, styrene-butadiene copolymer or acrylonitrile-butadiene copolymer.

[Non-conjugated diene-based polymer]

The non-conjugated diene-based polymer may be a homopolymer or a copolymer of two or more non-conjugated diene monomers or a copolymer of a non-conjugated diene monomer and another monomer. The copolymer may be either random or block. Non-conjugated diene-based polymers include ethylene-propylene rubber, ethylene-propylene-diene rubber, ethylene-butene-diene rubber, olefin-based copolymers such as ethylene-α-olefin copolymer, butyl rubber, brominated butyl rubber, acrylic rubber, fluorine rubber, silicone rubber, chlorinated polyethylene rubber, epichlorohydrin rubber, α,β-unsaturated nitrile-acrylic acid ester-conjugated diene copolymer rubber, urethane rubber and polysulfide rubber.

For ethylene-α-olefin copolymers, monomers that may be copolymerized with the ethylene unit include aliphatic-substituted vinyl monomers such as propylene, butene-1, pentene-1,4-methylpentene-1, hexene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1, eicosene-1 and isobutylene; aromatic vinyl monomers such as styrene and substituted styrene; esteric vinyl monomers such as vinyl acetate, acrylic acid ester, methacrylic acid ester, glycidylacrylic acid ester, glycidylmethacrylic acid ester and hydroxyethylmethacrylic acid ester, nitrogen-containing vinyl monomers such as acrylamide, allylamine, vinyl-p-aminobenzene and acrylonitrile, and dienes such as butadiene, cyclopentadiene, 1,4-hexadiene and isoprene.

The copolymer is preferably a copolymer of ethylene and one or more α-olefins of 3 to 20 carbon atoms, more preferably a copolymer of ethylene and one or more α-olefins of 3 to 16 carbon atoms, and most preferably a copolymer of ethylene and one or more α-olefins of 3 to 12 carbon atoms. From the viewpoint of exhibiting impact resistance, the molecular weight of the ethylene-α-olefin copolymer is preferably 10,000 or greater, more preferably 10,000 to 100,000, even more preferably 10,000 to 80,000 and yet more preferably 20,000 to 60,000. From the viewpoint of both flow property and impact resistance, the molecular weight distribution (weight-average molecular weight/number-average molecular weight: Mw/Mn) is preferably 3 or lower, and more preferably 1.8 to 2.7.

From the viewpoint of handleability during processing, the preferred ethylene unit content for the ethylene-α-olefin copolymer is 30 to 95 mass% with respect to the total amount of the ethylene-α-olefin copolymer.

These preferred ethylene-α-olefin copolymers can be produced by the method described in Japanese Examined Patent Publication HEI No. 4-12283, Japanese Unexamined Patent Publication SHO No. 60-35006, Japanese Unexamined Patent Publication SHO No. 60-35007, Japanese Unexamined Patent Publication SHO No. 60-35008, Japanese Unexamined Patent Publication HEI No. 5-155930, Japanese Unexamined Patent Publication HEI No. 3-163088 or US Patent No. 5272236, for example.

According to one aspect, the liquid rubber includes one or more types selected from the group consisting of diene rubber (a conjugated diene-based polymer according to one aspect), silicone rubber, urethane rubber and polysulfide rubber, as well as their hydrogenated forms.

Limiting the viscosity of the liquid rubber at 80°C to below a prescribed value is advantageous for uniformly dispersing the rubber composition into the matrix rubber component in the rubber composite. From the viewpoint of obtaining a satisfactory dispersion of the rubber composition into the matrix rubber component in the rubber composite, and from the viewpoint of satisfactorily dispersing the cellulose nanofibers in the liquid rubber, the viscosity of the liquid rubber at 80°C is preferably 1,000,000 mPa·s or lower, 500,000 mPa·s or lower, 250,000 mPa·s or lower or 100,000 mPa·s or lower, while from the viewpoint of obtaining a rubber composite with excellent physical properties (and especially storage modulus), it is preferably 50 mPa·s or higher, 100 mPa·s or higher or 300 mPa·s or higher.

From the viewpoint of satisfactorily dispersing the cellulose nanofibers in the liquid rubber, the viscosity of the liquid rubber at 25°C is preferably 1,000,000 mPa·s or lower, 500,000 mPa·s or lower or 200,000 mPa·s or lower, while from the viewpoint of obtaining a rubber composite with excellent physical properties (and especially storage modulus), it is preferably 100 mPa·s or higher, 300 mPa·s or higher or 500 mPa·s or higher.

Limiting the viscosity of the liquid rubber at 0°C to below a prescribed value is advantageous for dispersing the cellulose nanofibers in the liquid rubber. From the viewpoint of satisfactorily dispersing the cellulose nanofibers in the liquid rubber, the viscosity of the liquid rubber at 0°C is preferably 2,000,000 mPa·s or lower, 1,000,000 mPa·s or lower or 400,000 mPa·s or lower, while from the viewpoint of obtaining a rubber composite with excellent physical properties (and especially storage modulus), it is preferably 200 mPa·s or higher, 600 mPa·s or higher or 1,000 mPa·s or higher.

A lower temperature dependence for the viscosity of the liquid rubber is preferred from the viewpoint of satisfactorily dispersing the cellulose nanofibers in the liquid rubber within a wide range of mixing temperatures. From this viewpoint, the viscosity of the liquid rubber is preferably within the aforementioned range for all of the temperatures of 80°C, 25°C and 0°C.

The viscosity of the liquid rubber is the value measured using a Brookfield viscometer with a rotational speed of 10 rpm.

The content of liquid rubber in the rubber composition is preferably 0.1 mass% or greater, 0.5 mass% or greater, 1 mass% or greater, 5 mass% or greater or 10 mass% or greater from the viewpoint of satisfactorily obtaining the advantages of the liquid rubber, and preferably 99 mass% or lower, 95 mass% or lower, 90 mass% or lower, 80 mass% or lower, 70 mass% or lower, 60 mass% or lower or 50 mass% or lower from the viewpoint of satisfactorily obtaining the advantages of other components (such as cellulose nanofibers) by their addition in suitable amounts.

According to one aspect, the mass ratio of cellulose nanofibers in the rubber composition is 1 part by mass or greater, 5 parts by mass or greater, 10 parts by mass or greater, 20 parts by mass or greater, 30 parts by mass or greater, 33 parts by mass or greater, 40 parts by mass or greater or 50 parts by mass or greater, and according to another aspect it is 99 parts by mass or lower, 95 parts by mass or lower, 90 parts by mass or lower, 80 parts by mass or lower, 70 parts by mass or lower, 60 parts by mass or lower or 50 parts by mass or lower, with respect 100 parts by mass as the total of the cellulose nanofibers and liquid rubber.

<Surfactant>

The rubber composition of the present invention includes a surfactant which is a nonionic surfactant. Nonionic surfactants are preferred from the viewpoint of heat resistance. Nonionic surfactants can infiltrate into the voids between aggregates of cellulose nanofibers, rendering the aggregates porous.

The nonionic surfactant is preferably a compound having a hydrophilic group selected from the group consisting of hydroxyl, carboxy, sulfonic acid and amino groups, and a hydrocarbon group.

According to one aspect, the nonionic surfactant has an aliphatic group of 6 to 30 carbon atoms as the hydrophobic portion. The cellulose nanofibers of the embodiment typically form loose aggregates, but a nonionic surfactant has satisfactory affinity with rubber components due to the contribution of the carbon chains in the hydrophobic portion, while being able to easily infiltrate into the voids of the cellulose nanofiber aggregates, since the carbon chains of the hydrophobic portion are not excessively long, and can thus render the aggregates porous. For example, if a nonionic surfactant is allowed to infiltrate the aggregates in a wetted state and then dried to form a dried body, it will be possible to reduce shrinkage during drying, compared to a dried body obtained by drying aggregates without using a nonionic surfactant, thus allowing the cellulose nanofibers to be satisfactorily dispersed when the dried body is combined with a rubber component.

The aliphatic groups may be linear or alicyclic groups, or combinations thereof. According to one aspect, the number of carbon atoms in the aliphatic groups is 6 or more, 8 or more or 10 or more from the viewpoint of obtaining satisfactory dispersibility of the cellulose nanofibers in the rubber component, and according to another aspect it is 30 or less, 25 or less or 20 or less from the viewpoint of infiltration into the voids of the cellulose nanofibers aggregates.

The nonionic surfactant preferably has one or more structures selected from the group consisting of oxyethylene, glycerol and sorbitan as hydrophilic portions (specifically, a repeating structure having one or more of these as repeating units). These structures are preferred because they exhibit high hydrophilic properties while allowing different types of nonionic surfactants to be easily obtained by combination of different hydrophobic portions. In a nonionic surfactant having such a hydrophilic portion, the number of carbon atoms n in the hydrophobic portion and the number of repeating units m in the hydrophilic portion preferably satisfy the relationship $n > m$, from the viewpoint of obtaining satisfactory dispersibility of the cellulose nanofibers in the rubber component. The number of repeats m of the hydrophilic portion is preferably one or greater, 2 or greater, 3 or greater or 5 or greater from the viewpoint of satisfactory infiltration of the nonionic surfactant into the voids of the cellulose nanofiber aggregates, and preferably 30 or less, 25 or less, 20 or less or 18 or less, from the viewpoint of obtaining satisfactory dispersibility of the cellulose nanofibers in the rubber component.

The nonionic surfactant is preferably one or more types selected from the group consisting of compounds represented by the following general formula (1):

$$R\text{-}(OCH_2CH_2)_m\text{-}OH \qquad (1)$$

[where R represents a monovalent aliphatic group of 6 to 30 carbon atoms, and m is a natural number smaller than the number of carbon atoms of R], and compounds represented by the following general formula (2):

$$R_1OCH_2\text{-}(CHOH)_4\text{-}CH_2OR_2 \qquad (2)$$

[where $R_1$ and $R_2$ each independently represent a hydrogen atom, an aliphatic group of 1 to 30 carbon atoms, $-COR_3$ {where $R_3$ represents an aliphatic group of 1 to 30 carbon atoms} or $-(CH_2CH_2O)_y\text{-}R_4$ {where $R_4$ represents a hydrogen atom or an aliphatic group of 1 to 30 carbon atoms, and y is an integer of 1 to 30}].

In general formula (1), R corresponds to the hydrophobic portion, and $(OCH_2CH_2)$ (i.e. an oxyethylene unit) corresponds to the hydrophilic portion. The number of carbon atoms of R and the number of repeats m of $(OCH_2CH_2)$ are preferably within the same respective ranges specified above for the number of carbon atoms n of the hydrophobic portion and the number of repeats m of the hydrophilic portion.

In general formula (2), the number of carbon atoms of the aliphatic group of 1 to 30 carbon atoms, for each of $R_1$, $R_2$, $R_3$ and $R_4$, is preferably 6 or more, 8 or more or 10 or more and preferably 24 or less, 20 or less or 18 or less.

The value of y is one or greater, and preferably 2 or greater or 4 or greater and preferably 30 or smaller, 25 or smaller or 20 or smaller.

The amount of nonionic surfactant in the rubber composition is preferably 10 parts by mass or greater, 15 parts by mass or greater or 20 parts by mass or greater, and preferably 200 parts by mass or lower, 150 parts by mass or lower, 100 parts by mass or lower, 90 parts by mass or lower, 80 parts by mass or lower, 70 parts by mass or lower, 60 parts by mass or lower, 50 parts by mass or lower, 45 parts by mass or lower or 40 parts by mass or lower, with respect to 100 parts by mass of the cellulose nanofibers.

<Additional components>

The rubber composition may include additional components, in addition to the cellulose nanofibers, liquid rubber and surfactant. Additional components include additional polymers, dispersing agents, organic or inorganic fillers, heat stabilizers, antioxidants, antistatic agents and coloring agents. Examples of additional polymers are the rubber components and thermoplastic elastomers mentioned below as examples of matrix components for the rubber composite. The content ratio of optional additional components in the rubber composition is appropriately selected in a range that does not interfere with the desired effect of the invention, and for example, it may be 0.01 to 50 mass% or 0.1 to 30 mass%.

<Production of rubber composition>

The method for producing the rubber composition is not particularly restricted. The components used to form the rubber composition may be mixed by stirring means such as a rotating/revolving mixer, planetary mixer, homogenizer, homogenizer, propeller-type stirrer, rotary stirrer, electromagnetic stirrer, open roll, Banbury mixer, single-screw extruder or twin-screw extruder, to obtain a rubber composition. The stirring may be carried out with heating for efficient shearing. Mixing with a homogenizer is preferred from the viewpoint of applying high shearing force and pressure to promote dispersion. The order of addition of the components during mixing is not limited, and methods include:

(1) a method of simultaneously adding and mixing the cellulose nanofibers, the surfactant, the liquid rubber and optional other components to obtain a rubber composition,
(2) a method of premixing the components other than the liquid rubber to obtain a pre-mixture, and then mixing the pre-mixture with the liquid rubber to obtain a rubber composition.

Method (2) may comprise, for example:

mixing the cellulose nanofibers with the surfactant to cause the surfactant to infiltrate into the voids of the cellulose nanofiber aggregates, and then
adding and mixing the liquid rubber to cause the liquid rubber to infiltrate into the voids.

In method (2), the pre-mixture may be dried after obtaining the pre-mixture and before mixing with the liquid rubber. The obtained rubber composition may also be dried with control of the drying conditions to prepare a powder as described below.

<Powder>

One aspect of the disclosure provides a powder composed of the rubber composition of the disclosure. The powder may have one or more of the properties mentioned below. If the powder has excellent processing properties, the cellulose nanofibers will be able to exhibit an excellent dispersed state in the rubber component.

<Condition of cellulose nanofiber surfaces>

In powder according to one aspect, at least portions of the surfaces of the cellulose nanofibers are covered by the first rubber component, in order to facilitate dispersion without aggregation of the cellulose nanofibers in the second rubber component or third rubber component when it is kneaded with these rubber components. According to one aspect, the state in which at least portions of the surfaces of the cellulose nanofibers are covered by the first rubber component is a state in which the first rubber component and the cellulose nanofibers are in direct contact, with the average length of the contacting portions extending to a length of at least twice the mean fiber size of the cellulose nanofibers. The state in which the surfaces of the cellulose nanofibers in the powder are covered with the first rubber component is confirmed by observation under an electron microscope (a scanning electron microscope according to one aspect) or an atomic force microscope, but if confirmation is possible with either an electron microscope or atomic force microscope, then it is confirmed with an electron microscope. The mean fiber size is the value measured by the method of the disclosure, with powder as the measuring sample. The average length of the contacting portions is measured using an electron microscope (a scanning electron microscope according to one aspect) or an atomic force microscope, with powder as the measuring sample. Specifically, in an observation field adjusted to a magnification allowing observation of at least 30 cellulose nanofibers, the lengths of the first rubber component-contacting portions of each of 30 randomly selected cellulose nanofibers are measured and the number average is calculated, after which the number average of another 30 nanofibers is measured, for the average length for the contacting portions.

<Loose bulk density>

According to one aspect, the loose bulk density of the powder is preferably 0.01 g/cm$^3$ or greater, 0.05 g/cm$^3$ or greater, 0.10 g/cm$^3$ or greater, 0.15 g/cm$^3$ or greater or 0.20 g/cm$^3$ or greater, from the viewpoint of obtaining a satisfactory powder flow property and excellent feedability to the kneader, and from the viewpoint of inhibiting migration of the surfactant into the rubber, and it is preferably 0.50 g/cm$^3$ or lower, 0.40 g/cm$^3$ or lower, 0.30 g/cm$^3$ or lower, 0.25 g/cm$^3$ or lower or 0.20 g/cm$^3$ or lower, from the viewpoint of easily disintegrating the powder in the rubber so that the cellulose nanofibers satisfactorily disperse in the rubber, and from the viewpoint of avoiding excessive powder heaviness and reducing mixing defects with the powder and rubber.

<Compacted bulk density>

The compacted bulk density of the powder is controlled within a range that is useful for keeping the loose bulk density and degree of compaction within desirable ranges, and according to one aspect it is preferably 0.01 g/cm$^3$ or greater, 0.05 g/cm$^3$ or greater, 0.10 g/cm$^3$ or greater, 0.15 g/cm$^3$ or greater or 0.20 g/cm$^3$ or greater, and preferably 1.00 g/cm$^3$ or lower, 0.80 g/cm$^3$ or lower, 0.70 g/cm$^3$ or lower, 0.60 g/cm$^3$ or lower, 0.50 g/cm$^3$ or lower, 0.40 g/cm$^3$ or lower or 0.30 g/cm$^3$ or lower.

The loose bulk density and compacted bulk density are values measured by the procedures explained under the section EXAMPLES below, using a powder tester (Model PT-X) by Hosokawa Micron Group.

The method for producing the powder may be a method that includes a slurry preparation step in which a slurry containing the cellulose nanofibers and liquid medium is prepared, and a drying step in which the slurry is dried to form a powder.

(Slurry preparation step)

In this step, a slurry is prepared. Examples of liquid media to be used include commonly used water-miscible organic solvents, such as alcohols with boiling points of 50°C to 170°C (for example, methanol, ethanol, n-propanol, i-propanol, n-butanol, i-butanol, s-butanol and t-butanol); ethers (for example, propyleneglycol monomethyl ether, 1,2-dimethoxyethane, diisopropyl ether, tetrahydrofuran and 1,4-dioxane); carboxylic acids (for example, formic acid, acetic acid and lactic acid); esters (for example, ethyl acetate and vinyl acetate); ketones (for example, acetone, methyl ethyl ketone, methyl isobutyl ketone, cyclopentanone and cyclohexanone); and nitrogen-containing solvents (such as dimethylformamide, dimethyl acetamide and acetonitrile). According to a typical aspect, the liquid medium in the slurry consists essentially of water. The slurry may be composed of the cellulose nanofibers and liquid medium, but it may also include a surfactant and/or the first rubber component, and also optionally an additional component.

From the viewpoint of process efficiency in the subsequent drying step, the concentration of the cellulose nanofibers in the slurry is preferably 5 mass% or greater, 10 mass% or greater, 15 mass% or greater, 20 mass% or greater or 25 mass% or greater, and from the viewpoint of avoiding excessive increase in the slurry viscosity and its solidification by aggregation to maintain satisfactory handleability, it is preferably 60 mass% or lower, 55 mass% or lower, 50 mass% or lower or 45 mass% or lower. For example, while production of cellulose nanofibers is generally carried out in a dilute dispersion, the dilute dispersion can be concentrated to adjust the cellulose nanofiber concentration in the slurry to the aforementioned preferred range. A method such as suction filtration, pressure filtration, centrifugal dehydration or heating may be used for the concentration.

(Drying step)

In this step, the slurry is dried under controlled drying conditions to form a powder. The timing of addition of the components other than the cellulose nanofibers may be before, during and/or after drying of the slurry. A drying apparatus such as a spray drier or extruder may be used for the drying. The drying apparatus may be a commercial product, such as a Micromist spray dryer (Fujisaki Denki Co.), a spray drier (Ohkawara Kakohki Co., Ltd.), or a twin-screw extruder (Japan Steel Works, Ltd.). Appropriate control of the drying conditions, namely the drying speed, drying temperature and/or pressure (pressure reduction), and especially the drying speed, may be advantageous for obtaining powder in the desired form.

The drying speed, which is the amount of desorption (parts by mass) of the liquid medium per 1 minute per 100 parts by mass of slurry, may be 10%/min or greater, 50%/min or greater or 100%/min or greater from the viewpoint of rapidly drying the slurry to form powder of the desired particle size, and may be 10,000%/min or lower, 1000%/min or lower or 500%/min or lower, from the viewpoint of avoiding excessive micronization of the cellulose nanofibers to reduce aggregation of the cellulose nanofibers, while also obtaining satisfactory handleability. The drying speed is the value calculated by the following formula:

Drying speed (%/min) = (Slurry moisture content at drying start point (mass%) - powder moisture content at drying end point (mass%))/time required from drying start point to drying end point (min), (i.e. it is the average value throughout the drying step).

The drying start point is the point where the slurry or cake to be dried has been supplied to the apparatus and the step of drying at the prescribed drying temperature, pressure reduction and shear rate has begun, and the drying time does not include the pre-mixing period with different drying temperature, pressure reduction or shear rate from the drying step.

The drying end point is the point where the moisture content first begins to fall below 7 mass% with sampling at maximum intervals of 10 minutes after the drying start point.

In the case of a continuous drying apparatus, the time required from the drying start point to the drying end point can be interpreted as the residence time. In the case of a spray drier, the residence time can be calculated from the heating air volume and the drying chamber volume. When an extruder is used as the drying apparatus, the residence time can be calculated from the screw rotational speed and the total screw pitch count.

The drying temperature may be 20°C or higher, 30°C or higher, 40°C or higher or 50°C or higher, for example, from the viewpoint of drying efficiency and of suitably aggregating the cellulose nanofibers to form powder of the preferred particle size, and may also be 200°C or lower, 150°C or lower, 140°C or lower, 130°C or lower or 100°C or lower from the viewpoint of reducing heat degradation of the cellulose nanofibers and additional components and of avoiding excessive micronization of the cellulose nanofibers.

The drying temperature is the temperature of the heat source that is contacted with the slurry, and it is defined as the surface temperature of the temperature control jacket of the drying apparatus, the surface temperature of the heating cylinder, or the temperature of the hot air, for example.

The pressure reduction may be -1 kPa or lower, -10 kPa or lower, -20 kPa or lower, -30 kPa or lower, -40 kPa or lower or -50 kPa or lower, from the viewpoint of drying efficiency and of suitably aggregating the cellulose nanofibers to form powder of the preferred particle size, and - 100 kPa or higher, -95 kPa or greater or -90 kPa or greater from the viewpoint of avoiding excessive micronization of the cellulose nanofibers.

During the drying step, the residence time of the slurry at a temperature of 20°C to 200°C is preferably 0.01 minutes to 10 minutes, 0.05 minutes to 5 minutes or 0.1 minutes to 2 minutes. With drying under these conditions the cellulose nanofibers dry rapidly, satisfactorily producing powder of the preferred particle size.

When a spray drier is used, for example, the slurry is dried by introducing spray into a drying chamber containing circulating hot gas, using a spraying mechanism (such as a rotating disc or pressurized nozzle). The slurry droplet size during spray introduction may be 0.01 $\mu$m to 500 $\mu$m, 0.1 $\mu$m to 100 $\mu$m or 0.5 $\mu$m to 10 $\mu$m, for example. The hot gas may be an inert gas such as nitrogen or argon, or air. The hot gas temperature may be 50°C to 300°C, 80°C to 250°C or 100°C to 200°C, for example. Contact between the slurry droplets and the hot gas in the drying chamber may be by cocurrent flow, countercurrent flow or parallel flow. The particulate powder produced by drying of the droplets is collected using a cyclone or drum.

When an extruder is used, for example, the slurry is loaded into a screw-equipped kneading unit through a hopper, and the slurry is dried by continuous transport of the slurry with the screw in the kneading unit that is being depressurized and/or heated. The screw configuration may be a combination of a transport screw, counter-clockwise screw or kneading disc, in any order. The drying temperature may be 50°C to 300°C, 80°C to 250°C or 100°C to 200°C, for example.

<Master batch>

One aspect of the disclosure provides a master batch containing the rubber composition of the disclosure. According to one aspect, the master batch is a kneaded blend of the powder of the disclosure and a second rubber component.

<Second rubber component>

The second rubber component may be natural rubber, a conjugated diene-based polymer, a non-conjugated diene-based polymer, or a hydrogenated product of the same. The polymer or its hydrogenated product may also be an oligomer. Examples for the monomer composition of the second rubber component include the same examples mentioned above for the liquid rubber. The second rubber component may be liquid rubber as described above, or a non-liquid rubber.

A conjugated diene-based polymer as the second rubber component forming the matrix component may be partially hydrogenated or completely hydrogenated. From the viewpoint of inhibiting heat degradation during processing, the hydrogenation rate of the hydrogenated product is preferably 50% or greater, 80% or greater or 98% or greater, and from the viewpoint of low-temperature toughness it is preferably 50% or lower, 20% or lower or 0% (i.e. non-hydrogenated).

The amount of vinyl bonds (for example, butadiene 1,2- or 3,4-bonds) in the conjugated diene bond unit of a conjugated diene-based polymer as the second rubber component forming the matrix component is preferably 5 mol% or greater, 10 mol% or greater, 13 mol% or greater or 15 mol% or greater, and preferably 80 mol% or lower, 75 mol% or lower, 65 mol% or lower, 50 mol% or lower or 40 mol% or lower, from the viewpoint of inhibiting crystallization of the soft segments.

According to a preferred aspect, the second rubber component includes one or more selected from the group consisting of styrene-butadiene rubber, butadiene rubber and isoprene rubber.

The number-average molecular weight (Mn) of the second rubber component is preferably 100,000 or higher, 150,000 or higher or 200,000 or higher, from the viewpoint of obtaining a rubber composite with an excellent storage modulus, and it is preferably 800,000 or lower, 750,000 or lower, 700,000 or lower or 600,000 or lower, from the viewpoint of facilitating dispersion of the cellulose nanofibers in the second rubber component and obtaining satisfactory rubber elasticity without excessive hardening of the second rubber component after curing.

[Modified rubber]

The second rubber component may be modified rubber, and for example, modifying groups such as epoxy, acid anhydride, carboxy, aldehyde, hydroxyl, alkoxy, amino, amide, imide, nitro, isocyanate or mercapto groups may be introduced into any of the examples of conjugated diene-based polymers or non-conjugated diene-based polymers mentioned above. Examples of modified rubber include epoxy-modified natural rubber, epoxy-modified butadiene rubber, epoxy-modified styrene-butadiene rubber, carboxy-modified natural rubber, carboxy-modified butadiene rubber, carboxy-modified styrene-butadiene rubber, acid anhydride modified natural rubber, acid anhydride modified butadiene rubber and acid anhydride modified styrene-butadiene rubber.

The amount of modifying groups per 100 mol% of the total monomer unit is preferably 0.1 mol% or greater, 0.2 mol% or greater or 0.3 mol% or greater and preferably 5 mol% or lower or 3 mol% or lower, from the viewpoint of affinity between the cellulose nanofibers and the second rubber component. The amount of modifying groups can be confirmed by FT-IR (Fourier Transform Infrared Spectroscopy), solid NMR (Nuclear Magnetic Resonance), solution NMR, or a method of combining the previously specified monomer composition with quantitation by elemental analysis of the elements not present in the unmodified rubber, and calculating the molar ratio of modifying groups.

The content of the second rubber component in the master batch is preferably 20 mass% or greater, 30 mass% or greater or 40 mass% or greater, and preferably 99 mass% or lower, 95 mass% or lower or 90 mass% or lower.

[Thermoplastic elastomer]

According to one aspect, the second rubber component may include a thermoplastic elastomer or it may be a thermoplastic elastomer. Throughout the disclosure, according to one aspect, "elastomer" means a substance (specifically, a natural or synthetic polymer substance) that is an elastic solid at room temperature (23°C). According to another aspect, "elastic solid" means that the storage modulus at 23°C, 10 Hz, measured based on dynamic viscoelasticity, is 1 MPa to 100 MPa. The thermoplastic elastomer may be a conjugated diene-based polymer or a non-conjugated diene-based polymer, and according to one aspect it is a crosslinked product. The preferred monomer composition of the thermoplastic elastomer may be the same as mentioned above under (Conjugated diene-based polymer) and (Non-conjugated diene-based polymer).

The number-average molecular weight (Mn) of the thermoplastic elastomer is preferably 10,000 to 500,000 or 40,000 to 250,000, from the viewpoint of both impact strength and flow property.

The thermoplastic elastomer may also have a core-shell structure. Elastomers having a core-shell structure include core-shell type elastomers having a core of particulate rubber and a shell of a glassy graft layer formed around the exterior of the core. The core is preferably butadiene-based rubber, acrylic rubber or silicone-acrylic composite rubber. A vitreous polymer such as styrene resin, acrylonitrile-styrene copolymer or acrylic resin is suitable for the shell.

From the viewpoint of obtaining more excellent compatibility with the rubber composition, the thermoplastic elastomer is preferably at least one type selected from the group consisting of styrene-butadiene block copolymer, styrene-ethylene-butadiene block copolymer, styrene-ethylene-butylene block copolymer, styrene-butadiene-butylene block copolymer, styrene-isoprene block copolymer, styrene-ethylene-propylene block copolymer, styrene-isobutylene block copolymer, hydrogenated styrene-butadiene block copolymer, hydrogenated styrene-ethylene-butadiene block copolymer, hydrogenated styrene-butadiene-butylene block copolymer, hydrogenated styrene-isoprene block copolymer and styrene homopolymer (polystyrene), and more preferably it is at least one type selected from the group consisting of styrene-butadiene block copolymer, hydrogenated styrene-butadiene block copolymer and polystyrene.

According to one aspect, at least a portion of the thermoplastic elastomer may have an acidic functional group. That the thermoplastic elastomer has an acidic functional group, for the purpose of the disclosure, means that an acidic functional group has been added via chemical bonding into the molecular skeleton of the elastomer. An "acidic functional group", for the purpose of the disclosure, means a functional group that can react with a basic functional group, and specific examples include hydroxyl, carboxyl, carboxylate, sulfo and acid anhydride groups.

The amount of the acidic functional group added to the elastomer is preferably 0.01 mass% or greater, more preferably 0.1 mass% or greater and even more preferably 0.2 mass% or greater, and preferably 5 mass% or lower, more preferably 3 mass% or lower and even more preferably 2 mass% or lower, based on 100 mass% of the elastomer, from the viewpoint of affinity between the cellulose nanofibers and the elastomer component. The number of acidic functional groups is the value obtained by measuring the sample against a calibration curve drawn using the characteristic absorption band for the acid, after measuring a calibration sample premixed with the acidic substance using an infrared absorption spectrometer.

Elastomers with acidic functional groups include elastomers having a core-shell structure wherein the shell is a layer formed using a copolymerizing component such as acrylic acid, and elastomers which are modified by grafting $\alpha,\beta$-unsaturated dicarboxylic acids or their derivatives onto ethylene-$\alpha$-olefin copolymers, polyolefins, aromatic compound-conjugated diene copolymers or hydrogenated aromatic compound-conjugated diene copolymers that include acrylic acid as a monomer, either in the presence or in the absence of a peroxide.

According to a preferred aspect, the elastomer is an acid anhydride-modified elastomer.

More preferred among these are modified forms with $\alpha,\beta$-unsaturated dicarboxylic acids or their derivatives grafted onto polyolefins, aromatic compound-conjugated diene copolymers or hydrogenated aromatic compound-conjugated diene copolymers, either in the presence or in the absence of a peroxide, and particularly preferred are modified forms with $\alpha,\beta$-unsaturated dicarboxylic acids or their derivatives grafted onto ethylene-$\alpha$-olefin copolymers or hydrogenated aromatic compound-conjugated diene block copolymers, either in the presence or in the absence of a peroxide.

Specific examples of $\alpha,\beta$-unsaturated dicarboxylic acids and their derivatives include maleic acid, fumaric acid, maleic anhydride and fumaric anhydride, with maleic anhydride being particularly preferred.

According to one aspect, the elastomer may be a mixture of an elastomer with an acidic functional group and an elastomer without an acidic functional group. The mixing ratio of the elastomer with an acidic functional group and the elastomer without an acidic functional group is preferably 10 mass% or greater, more preferably 20 mass% or greater, even more preferably 30 mass% or greater and most preferably 40 mass% or greater, where 100 mass% is the total of both, from the viewpoint of satisfactorily maintaining high toughness and stable physical properties for the rubber composite by the elastomer with an acidic functional group. There is no particular upper limit, and essentially all of the elastomer may be an elastomer with an acidic functional group, but from the viewpoint of avoiding flow property issues it is preferably 80 mass% or lower.

The content of the thermoplastic elastomer in the master batch is preferably 20 mass% or greater or 30 mass% or greater, and preferably 99 mass% or lower, 95 mass% or lower or 90 mass% or lower.

<Vulcanizing agent and vulcanization accelerator>

When the master batch includes uncured rubber, the master batch will typically include a vulcanizing agent, and optionally a vulcanization accelerator as well. The vulcanizing agent and vulcanization accelerator may be appropriately selected from among conventional publicly known compounds, depending on the type of uncured rubber in the master batch. The vulcanizing agent used may be an organic peroxide, an azo compound, an oxime compound, a nitroso compound, a polyamine compound, sulfur or a sulfur compound. Sulfur compounds include sulfur monochloride, sulfur dichloride, disulfide compounds and polymer polysulfur compounds. The amount of vulcanizing agent is preferably 0.01 parts by mass to 20 parts by mass or 0.1 part by mass to 15 parts by mass with respect to 100 parts by mass of the uncured rubber in the master batch.

The vulcanization accelerator may be a sulfenamide-based, guanidine-based, thiuram-based, aldehyde-amine-based, aldehyde-ammonia-based, thiazole-based, thiourea-based or dithiocarbamate-based vulcanization accelerator. Zinc oxide or stearic acid may also be used as vulcanizing aids. The amount of vulcanization accelerator is preferably 0.01 parts by mass to 20 parts by mass or 0.1 part by mass to 15 parts by mass with respect to 100 parts by mass of the uncured rubber in the master batch.

[Rubber additives]

The master batch may also include conventional publicly known rubber additives (such as stabilizers, softening agents and aging inhibitors). Rubber stabilizers may be one or more antioxidants such as 2,6-di-tert-butyl-4-hydroxytoluene (BHT), n-octadecyl-3-(4'-hydroxy-3',5'-di-tert-butylphenyl)propionate or 2-methyl-4,6-bis[(octylthio)methyl]phenol. Rubber softening agents may be one or more process oils or extender oils. However, since the master batch of the embodiment can form a flexible molded article according to one aspect, it preferably does not include a rubber softening agent, according to that aspect.

<Additional components>

The master batch may further include additional components as necessary, for improved performance. Additional components include dispersing agents, organic or inorganic fillers, heat stabilizers, antioxidants, antistatic agents and coloring agents. The content ratio of optional additional components in the master batch is appropriately selected in a range that does not interfere with the desired effect of the invention, and for example, it may be 0.01 to 50 mass% or 0.1 to 30 mass%.

According to a preferred aspect, the master batch includes the cellulose nanofibers at 10 parts by mass to 50 parts by mass, 15 parts by mass to 40 parts by mass or 20 parts by mass to 30 parts by mass, and the surfactant at 1 part by mass to 50 parts by mass, 2 parts by mass to 40 parts by mass or 3 parts by mass to 30 parts by mass, with respect to 100 parts by mass of the rubber component. The amount of rubber component is the total amount of the rubber components in the master batch (according to one aspect, the total amount of the first rubber component and second rubber component). According to one aspect, the component composition of the master batch may be the same as described above for the rubber composition. The mass ratio with respect to the additional component (the second rubber component according to one aspect) in the master batch (i.e., master batch/additional component) may be 1/99 to 99/1, 5/95 to 95/5, 10/90 to 90/10, 20/80 to 80/20, 30/70 to 70/30 or 40/60 to 60/40.

One aspect of the disclosure provides a method for producing a master batch that includes a step of kneading the powder of the disclosure with the second rubber component to obtain a master batch. The kneading conditions are not particularly restricted, and for example, a kneader used for common rubber kneading, such as a Banbury mixer or open roll, may be used.

<Rubber composite>

One aspect of the disclosure provides a rubber composite that includes the rubber composition of the embodiment and a matrix component (i.e. the component other than the rubber composition), the composite being obtained by mixing them together, according to one aspect. According to a typical aspect, the rubber composite is derived from powder or a master batch of the disclosure. According to one aspect, the rubber composite includes the cellulose nanofibers, the liquid rubber and the surfactant, as well as the third rubber component as the matrix component, and optional additional components. The third rubber component may be one or more selected from the group consisting of uncured rubber and thermoplastic elastomers.

According to one aspect, the rubber composite is a kneaded blend of the powder or master batch of the disclosure and the third rubber component. Specific preferred examples of the third rubber component are the same as mentioned above for the second rubber component. The first, second and third rubber components may differ in their constituent monomer component type, constituent monomer component ratio and/or molecular weight (they may be different types), or two or more of the first, second and third rubber components may have the same constituent monomer component type, constituent monomer component ratio and/or molecular weight (they may be the same type). In a rubber composite according to a preferred aspect, at least parts of the surfaces of the cellulose nanofibers are covered by the first rubber component. The state of coverage can be confirmed by observation using a scanning electron microscope or atomic force microscope. However, if the first rubber component cannot be distinguished from the second and/or third rubber component by observation with either a scanning electron microscope or atomic force microscope, then at least parts of the surfaces may be considered to be covered by the first rubber component if at least parts of the surfaces of the cellulose nanofibers are covered by indistinguishable rubber components. In such cases, the first rubber component and the second and/or third rubber component are of the same type, or of different types with very similar properties. Therefore having the cellulose nanofibers covered by such indistinguishable rubber components may exhibit the advantages of having the cellulose nanofibers covered by the first rubber component.

According to one aspect, the mass ratio of the powder and third rubber component (powder/third rubber component) is 1/99 to 99/1, 5/95 to 95/5, 10/90 to 90/10, 20/80 to 80/20, 30/70 to 70/30 or 40/60 to 60/40.

According to one aspect, the mass ratio of the master batch and the third rubber component (master batch/third rubber component) may be 1/99 to 99/1, 5/95 to 95/5, 10/90 to 90/10, 20/80 to 80/20, 30/70 to 70/30 or 40/60 to 60/40.

The rubber composite can be produced by a method that includes a step of obtaining a rubber composite by kneading the powder of the disclosure and the third rubber component, or forming a master batch by the method for producing a master batch of the disclosure and then kneading the master batch with the third rubber component. The kneading conditions are not particularly restricted, and for example, a kneader used for common rubber kneading, such as a Banbury mixer or open roll, may be used.

The content of the cellulose nanofibers in the rubber composite is preferably 0.5 mass% or greater, 1 mass% or greater or 2 mass% or greater, and preferably 30 mass% or lower, 20 mass% or lower, 15 mass% or lower or 10 mass% or lower.

The total content of the polymer component in the rubber composite (the total content of the first, second and third rubber component, according to one aspect) is preferably 1 mass% or greater, 2 mass% or greater or 5 mass% or greater, and preferably 99 mass% or lower, 95 mass% or lower or 90 mass% or lower.

The mass ratio of the cellulose nanofibers/ total polymer component in the rubber composite is preferably 1/99 to 50/50, 2/98 to 40/60 or 3/97 to 30/70.

The surfactant content in the rubber composite may be 0.1 mass% or greater, 0.5 mass% or greater or 1 mass% or greater, according to one aspect, and 10 mass% or lower, 5 mass% or lower or 1 mass% or lower, according to another aspect.

In the rubber composite of one aspect, the amount of vulcanizing agent and/or vulcanization accelerator with respect to uncured rubber in the rubber composite may be in the same range as described above for the amount of vulcanizing agent and/or vulcanization accelerator with respect to uncured rubber in the master batch.

In the rubber composite of one aspect, the amounts of rubber additives and additional components in the rubber composite may also be in the same range as described above for the amounts in the master batch.

<Cured rubber product and molded article>

One aspect of the disclosure provides a cured rubber product as the cured product of a curable component including the rubber composition of the disclosure. According to one aspect, the rubber composition of the disclosure may be molded into a desired shape together with other desired components, to produce a desired molded article. According to another aspect, the rubber composition of the disclosure may be mixed with the third rubber component and optional additional components to form a rubber composite, and the rubber composite may then be molded into the desired shape either alone or with other components, to produce the desired molded article. The method of combining the components and the method of molding are not particularly restricted, and may be selected depending on the desired molded article. Molding methods include, but are not limited to, the following:

(1) a method in which the rubber composition or master batch includes the uncured rubber, and when the rubber composition or master batch is molded alone or together with additional components, the uncured rubber is cured before, during and/or after molding to obtain a molded article including the cured rubber product,

(2) a method in which the rubber composition includes the uncured rubber, and the cured rubber product obtained by curing the uncured rubber in the rubber composition is formed as the master batch, which is then molded together with the additional components to obtain a molded article, and

(3) a method in which the rubber component in the rubber composition is a thermoplastic elastomer, and the rubber composition is melt molded either alone or together with additional components to obtain a molded article. The molding may be carried out by injection molding, extrusion molding, irregular shape extrusion molding, blow molding or compression molding.

For method (2), the master batch/additional component mass ratio in the cured rubber product may be 1/99 to 99/1, 5/95 to 95/5, 10/90 to 90/10, 20/80 to 80/20, 30/70 to 70/30 or 40/60 to 60/40, for example.

According to one aspect, the cured rubber product is the cured product of a rubber composite of the disclosure. According to one aspect, the cured rubber product can be produced by a method including a step of obtaining a rubber composite by the method for producing a rubber composite of the disclosure, and a step of obtaining a cured rubber product by curing the rubber composite. According to another aspect, a cured rubber product can be obtained using a vulcanizing press in a manner compliant with JIS K6299.

The cured rubber product may be used to form molded articles of various shapes. The molded articles can be used for a wide range of purposes including industrial machinery parts, general machine parts, automobile/railway/vehicle/ship/aerospace-related parts, electronic and electrical components, construction and civil engineering materials, daily household items, sports and leisure goods, wind power generation case members, and container and packaging materials. Examples of such purposes include molded articles for automobile parts (for example, tires, bumpers, fenders, door panels, various moldings, emblems, engine hoods, wheel caps, roofs, spoilers, exterior parts including aero parts, and interior parts including instrument panels, console boxes and trims), battery parts (such as on-vehicle secondary battery parts, lithium ion secondary battery parts, solid methanol battery fuel cases and fuel cell tubings), electronic and electrical device parts (for example, computers and peripheral devices, junction boxes, connectors, OA devices, televisions, videos, disc players, chassis, refrigerators, air conditioners and liquid crystal projectors), and daily household items (such as shoe outsoles).

One aspect of the disclosure provides a shoe outsole, tire, vibration-proof rubber or drive belt that includes a cured rubber product of the disclosure.

EXAMPLES

Exemplary modes of the invention will now be further illustrated using Examples, with the understanding that the invention is not limited to these Examples.

<Evaluation methods>

<Liquid rubber>

[Vinyl and aromatic styrene contents]

A sample was dissolved in deuterated chloroform and measured by $^{13}$C-NMR (JEOL ECZ500) under the following conditions.

Resonance frequency: 125 MHz
Pulse width: 90°
Repetition time: 8 sec
Total: 5120 times
Temperature: room temperature
Chemical shift reference: $CDCl_3$ 77.0 ppm

[Viscosity at 25°C]

The viscosity of the liquid rubber was measured using a Brookfield viscometer at a rotational speed of 10 rpm.

[Number-average molecular weight (Mn) and weight-average molecular weight (Mw)]

Three columns packed with polystyrene gel were used in linkage for GPC to obtain a chromatogram, and the molecular weight (Mn, Mw) and molecular weight distribution (Mw/Mn) were calculated from a calibration curve using standard polystyrene. The solvent used was tetrahydrofuran.

<Rubber composition>

[Outer appearance (dispersibility of cellulose nanofibers)]

The rubber compositions obtained in Examples 1 to 5 and Comparative Examples 2 and 3 were observed with an optical microscope under the following conditions. A 1 mg sample was sandwiched between two cover glass panels and crushed and spread to a uniform thickness. The sample was placed on the stage of a BX51P polarizing microscope by Olympus Corp. A U-DICR differential interference prism by Olympus Corp. was inserted and the differential interference was observed. The dispersibility of the filler was evaluated on the following scale.

A: Generally uniformly dispersed.
B: Dispersed, but with visible aggregation.
C: Extensive aggregation confirmed.

[Storage modulus]

For the rubber compositions of Examples 1 to 5 and Comparative Examples 2 and 3 and the liquid rubber of Comparative Example 1, a HAAKE MARS40 Rheometer by Thermo Fisher Scientific Inc. was used to measure the frequency dispersion at 25°C with a strain of 0.002% and parallel plates separated by a gap of 1 mm, to determine the storage modulus. A high storage modulus indicates satisfactory dispersion of the cellulose nanofibers in the rubber, with satisfactory dispersion of the cellulose nanofibers in the rubber when kneaded into the rubber as the rubber master batch, meaning that it is possible to obtain a rubber composition with excellent mechanical properties including elastic modulus, storage modulus and hardness.

<Dry powder>

The dry powder was evaluated as follows, using a powder tester (Model PT-X by Hosokawa Micron Group).

[Loose bulk density]

The dried body was placed in a 100 mL-volume stainless steel closed-bottom cylindrical container (50.46 mm inner diameter × 50 mm depth), using a dispensing spoon at 10 g/min to overflowing, and after top scraping the dried body, its weight was measured to a precision of 0.01 g. The number-average value of 3 weight measurements was divided by the internal volume of the closed-bottom cylindrical container to calculate the loose bulk density.

[Compacted bulk density]

A sufficient volume of resin adapter (50.46 mm inner diameter × 40 mm length) was connected in a closely fitting manner with the top of the same type of closed-bottom cylindrical container used for the loose bulk density, and the dried body was introduced to overflowing by the same procedure used for measurement of the loose bulk density, after which the adapter-connected closed-bottom cylindrical container was subjected to 50 Hz vibration at an amplitude of 1.5 mm for 30 seconds with a motor having an eccentric weight on the rotating shaft. The adapter was then removed, the top powder was scraped off, and the weight was measured to a precision of 0.01 g. The number-average value of three weight measurements was divided by the internal volume of the closed-bottom cylindrical container to calculate the compacted bulk density.

<Cured rubber product>

The cured rubber product was evaluated in the following manner.

(1) Tensile strength

This was evaluated by the tensile test method of JIS K-6251.

(2) Storage modulus

The storage modulus was evaluated using an ARES-G2 viscoelasticity tester by TA Instruments, by the torsion method at 50°C, 10 Hz frequency, 3% strain.

(3) Dispersibility of cellulose nanofibers

A 5 cm-square region on the vulcanizing pressed surface of the cured rubber product was visually examined and the dispersed state of the cellulose nanofibers was evaluated on the following scale.

A: No visible aggregates
B: Few aggregates (1 to 10).
C: Numerous aggregates (≥11).

<Materials>

<Liquid rubber>

Liquid rubber-1: Butadiene-styrene random copolymer (RICON 184, available from Cray Valley Co.), 25°C viscosity: 40,000 cP, number-average molecular weight (Mn): 3,200, weight-average molecular weight (Mw): 14,000, Mw/Mn: 4.3, vinyl content 19 mol%, aromatic styrene content: 8 mol%
Liquid rubber-2: Butadiene-styrene random copolymer (RICON 100, available from Cray Valley Co.), 25°C viscosity: 75,000 cP, number-average molecular weight (Mn): 2,100, weight-average molecular weight (Mw): 4,500, Mw/Mn: 2.1, vinyl content 42 mol%, aromatic styrene content: 9 mol%

\<Solution polymerized rubber\>

Rubber-1: ASAPRENE Y031 (available from Asahi Kasei Corp.)

\<Cellulose nanofibers\>

CNF-1: Microfilament cellulose (CELISH KY-100G, available from Daicel Miraizu, Ltd.)

CNF-2: Microfilament cellulose

After immersing 3 parts by mass of cotton linter pulp in 27 parts by mass of water, the mixture was dispersed with a pulper. Next, 170 parts by mass of water was added to 30 parts by mass of the pulper-processed cotton linter pulp slurry (of which 3 parts by mass was cotton linter pulp), dispersing the latter in the water (1.5 mass% solid content), and a Model SDR14 Lab Refiner (pressurized DISK type) by Aikawa Iron Works Co. was used as a disc refiner apparatus for beating treatment of the aqueous dispersion for 30 minutes with a disc clearance of 1 mm. This was followed by thorough beating under conditions with clearance reduced to a level of near zero, to obtain a beaten aqueous dispersion (solid concentration: 1.5 mass%). The obtained beaten aqueous dispersion was directly subjected to micronization treatment 10 times using a high-pressure homogenizer (NSO15H by Niro Soavi) at an operating pressure of 100 MPa, to obtain a microcellulose fiber slurry (solid concentration: 1.5 mass%). The mixture was then concentrated to a solid content of 10 mass% using a dehydrator, to obtain a concentrated CNF-2 cake.

\<Nonionic surfactant\>

Surfactant-1: Polyoxyethylene(2) monolauryl ether (EMULGEN 102KG, available from Kao Corp.), where the number in parentheses indicates the number of oxyethylene chain repeats
Surfactant-2: Sorbitan monooleate (RHEODOL SP-O10 V, available from Kao Corp.)
Surfactant-3: Polyoxyethylene(6) sorbitan monolaurate (RHEODOL TW-L106, available from Kao Corp.), where the number in parentheses indicates the number of oxyethylene chain repeats
Surfactant-4: Ethylene glycol-propylene glycol copolymer (PEG-PPG) (SANNIX GL-3000, available from Sanyo Chemical Industries, Ltd.)

\<Thermoplastic elastomer\>

SEBS H1052: TUFTEC H1052, product name of Asahi Kasei Corp.

\<Silica\>

Silica-1: Precipitated silica (ULTRASIL 7000 GR, available from Degussa Ltd.)

\<Silane coupling agent\>

Si75: bis(3-(Triethoxysilyl)propyl) disulfide (available from Evonik, Japan)

\<Oil\>

PF30: Mineral oil (available from JXTG Energy)

\<Vulcanizing aid\>

Zinc oxide: Available from FujiFilm-Wako Pure Chemical Industries
Stearic acid: Available from FujiFilm-Wako Pure Chemical Industries

<Wax>

SUNNOC: Selected Special Wax (available from Ouchi Shinko Chemical Industrial Co., Ltd.)

<Aging inhibitor>

NOCRAC 6C: N-Phenyl-N'-(1,3-dimethylbutyl)-p-phenylenediamine (available from Ouchi Shinko Chemical Industrial Co., Ltd.)

<Vulcanization accelerator>

NOCCELER CZ: N-Cyclohexyl-2-benzothiazolyl sulfenamide (available from Ouchi Shinko Chemical Industrial Co., Ltd.)
NOCCELER D: 1,3-Diphenylguanidine (available from Ouchi Shinko Chemical Industrial Co., Ltd.)

<Preparation of rubber composition>

<Example 1>

Purified water was added to CELISH KY100G (Daicel Fine Chemicals, aqueous dispersion of cellulose fibers) to prepare an aqueous dispersion with a final cellulose nanofiber content of 5 mass%. To this there were added liquid rubber-1 (RICON184) and surfactant-1, to prepare an aqueous dispersion with a final composition of 90 mass% water, 5 mass% cellulose fibers, 2.86 mass% liquid rubber and 2.14 mass% surfactant. The aqueous dispersion was mixed for 5 minutes using an ARE-310 rotating/revolving mixer by Thinky Corp., to obtain a dispersion of a cellulose nanofiber composition. The resulting dispersion was dried at 80°C using an SPH-201 by Espec Corp. to obtain a dried body. The obtained dried body was pulverized using an MS-05 Mini Speed Mill by Labonect Co., and then 20 parts by mass of the dried body was added to 80 parts by mass of liquid rubber-1 (RICON184), and an ARE-310 rotating/revolving mixer by Thinky Corp. was used for 15 minutes of mixing to obtain a rubber composition.

<Example 2>

Purified water was added to CELISH KY100G (Daicel Fine Chemicals, aqueous dispersion of cellulose fibers) to prepare an aqueous dispersion with a final cellulose nanofiber content of 5 mass%. To this there was added surfactant-1, to prepare an aqueous dispersion with a final composition of 92.86 mass% water, 5 mass% cellulose fibers and 2.14 mass% surfactant. The aqueous dispersion was mixed for 5 minutes using an ARE-310 rotating/revolving mixer by Thinky Corp., to obtain a dispersion of a cellulose nanofiber composition. The resulting dispersion was dried at 80°C using an SPH-201 by Espec Corp. to obtain a dried body. The obtained dried body was pulverized using an MS-05 Mini Speed Mill by Labonect Co., and then 14.29 parts by mass of the dried body was added to 85.71 parts by mass of liquid rubber-1 (RICON184), and an ARE-310 rotating/revolving mixer by Thinky Corp. was used for 15 minutes of mixing to obtain a rubber composition.

<Example 3>

A rubber composition was prepared under the same conditions as Example 2, except that surfactant-1 was replaced with surfactant-2.

<Example 4>

A rubber composition was prepared under the same conditions as Example 2, except that surfactant-1 was replaced with surfactant-3.

<Example 5>

A rubber composition was prepared under the same conditions as Example 2, except that surfactant-1 was replaced with surfactant-4.

<Comparative Example 1>

Liquid rubber-1 (RICON184) was used directly.

<Comparative Example 2>

After adding 10 parts by mass of silica-1 to 90 parts by mass of liquid rubber-1 (RICON 184), an ARE-310 rotating/revolving mixer by Thinky Corp. was used for 15 minutes of mixing to obtain a rubber composition.

<Comparative Example 3>

Purified water was added to CELISH KY100G (Daicel Fine Chemicals, aqueous dispersion of cellulose fibers) to prepare an aqueous dispersion with a final cellulose nanofiber content of 5 mass%. To this there was added liquid rubber-1 (RICON184), to obtain an aqueous dispersion with a final composition of 92.86 mass% water, 5 mass% cellulose fiber and 2.14 mass% liquid rubber-1. The aqueous dispersion was mixed for 5 minutes using an ARE-310 rotating/revolving mixer by Thinky Corp., to obtain a dispersion of a cellulose nanofiber composition. The resulting dispersion was dried at 80°C using an SPH-201 by Espec Corp. to obtain a dried body. The obtained dried body was pulverized using an MS-05 Mini Speed Mill by Labonect Co., and then 14.29 parts by mass of the pulverized dried body was added to 85.71 parts by mass of liquid rubber-1 (RICON184), and an ARE-310 rotating/revolving mixer by Thinky Corp. was used for 15 minutes of mixing to obtain a rubber composition.

The results are shown in Table 1. In Examples 1 to 5, the cellulose nanofibers were satisfactorily dispersed in the rubber, and the storage modulus was high at a frequency of 1 Hz. In Comparative Example 3, numerous aggregated masses were present in the rubber, and a stable measured value could not be obtained in measurement of the storage modulus.

[Table 1]

Table 1

| | | Example 1 | Example 2 | Example 3 | Example 4 | Example 5 | Comp. Example 1 | Comp. Example 2 | Comp. Example 3 |
|---|---|---|---|---|---|---|---|---|---|
| Rubber composition content (mass%) | Liquid rubber-1 | 85.71 | 85.71 | 85.71 | 85.71 | 85.71 | 100 | 90 | 90 |
| | CNF-1 | 10 | 10 | 10 | 10 | 10 | | | 10 |
| | Surfactant-1 | 4.29 | 4.29 | | | | | | |
| | Surfactant-2 | | | 4.29 | | | | | |
| | Surfactant-3 | | | | 4.29 | | | | |
| | Surfactant-4 | | | | | 4.29 | | | |
| | Silica-1 | | | | | | | 10 | |
| Evaluation | Storage modulus (Pa) at 1 Hz frequency | 34393 | 18025 | 22767 | 18575 | 10706 | 12 | 360 | Not measurable |
| | Filler dispersibility (A-C) | A | A | A | A | A | -- | A | C |

<Dispersion of rubber composition in thermoplastic elastomer>

<Example 6>

Purified water was added to CELISH KY100G (Daicel Fine Chemicals, aqueous dispersion of cellulose fibers) to prepare an aqueous dispersion with a final cellulose nanofiber content of 5 mass%. To this there were added liquid rubber-2 (RICON100) and surfactant-1, to prepare an aqueous dispersion with a final composition of 90 mass% water, 5 mass% cellulose fibers, 7.86 mass% liquid rubber and 2.14 mass% surfactant. The aqueous dispersion was mixed for 15 minutes using an ARE-310 rotating/revolving mixer by Thinky Corp., to obtain a dispersion of a cellulose nanofiber composition. The resulting dispersion was dried at 80°C using an SPH-201 by Espec Corp. to obtain a rubber composition.
Next, a mini kneader (Xplore) by Rheo Lab was used to add 15 g of the rubber composition to 85 g of the thermoplastic elastomer-1 (SEBS H1052), and the mixture was melt kneaded for 5 minutes at 200°C to obtain a cellulose nanofiber-dispersed rubber strand. The obtained rubber strand was hot pressed for 10 minutes at 200°C, 10 kN to obtain a sheet. Visual observation of the sheet revealed no aggregates.

<Comparative Example 4>

Purified water was added to CELISH KY100G (Daicel Fine Chemicals, aqueous dispersion of cellulose fibers) to prepare an aqueous dispersion with a final cellulose nanofiber content of 5 mass%. To this there was added surfactant-1, to prepare an aqueous dispersion with a final composition of 92.86 mass% water, 5 mass% cellulose fibers and 2.14 mass% surfactant. The aqueous dispersion was mixed for 15 minutes using an ARE-310 rotating/revolving mixer by Thinky Corp., to obtain a dispersion of a cellulose nanofiber composition. The resulting dispersion was dried at 80°C using an SPH-201 by Espec Corp. to obtain a cellulose nanofiber-containing composition.
Next, a mini kneader (Xplore) by Rheo Lab was used to add 7.1 g of the cellulose nanofiber-containing rubber composition to 92.9 g of the thermoplastic elastomer-1 (SEBS H1052), and the mixture was melt kneaded for 5 minutes at 200°C to obtain a cellulose nanofiber-dispersed rubber strand. The obtained rubber strand was hot pressed for 10 minutes at 200°C, 10 kN to obtain a sheet. Visual observation of the sheet revealed numerous aggregates.

<Production of cured rubber product>

<Example 7>

Purified water was added to CNF-2 (aqueous dispersion of cellulose fibers) to prepare an aqueous dispersion with a final cellulose nanofiber content of 5 mass%. To this there were added liquid rubber-1 and surfactant-1, to prepare an aqueous dispersion with a final composition of 90 mass% water, 5 mass% cellulose fibers, 2.86 mass% liquid rubber and 2.14 mass% surfactant. The aqueous dispersion was mixed for 5 minutes using an ARE-310 rotating/revolving mixer by Thinky Corp., to obtain a dispersion of a cellulose nanofiber composition. The resulting dispersion was dried at 80°C using an SPH-201 by Espec Corp. to obtain a dried body. The obtained dried body was pulverized for 30 seconds using an MS-05 Mini Speed Mill by Labonect Co., to obtain a cured rubber production powder. The loose bulk density and compacted bulk density of the dry powder were measured by the methods described above.
A Laboplastomil by Toyo Seiki Co., Ltd. was then heated to 70°C, 100 parts by mass of rubber-1 (ASAPRENE Y031) was added and the mixture was kneaded for 0.5 minutes, after which 10 parts by mass of the cured rubber production powder, a vulcanizing aid (2.5 parts by mass zinc oxide and 2 parts by mass stearic acid), 1.5 parts by mass of wax and 2 parts by mass of an antioxidant were added and kneaded for 5.5 minutes as the first-stage kneading. The resulting first-stage kneaded composition was then added to a Laboplastomil that had been heated to 70°C, and after kneading for 0.5 minutes, 1.7 parts by mass of sulfur and a vulcanization accelerator (1.7 parts by mass NOCCELER CZ and 2 parts by mass of NOCCELER D) were added according to the composition listed in Table 2, and the mixture was kneaded for 2 minutes. The resulting second-stage kneaded composition was vulcanized with a vulcanizing press for 20 minutes at 160°C to obtain a cured rubber product.

<Example 8>

A cured rubber product was obtained in the same manner as Example 7, except that pulverizing of the dried body was carried out using a FreDrive hammer mill by EarthTechnica Co., Ltd., instead of the MS-05 Mini Speed Mill by Labonect Co.

<Example 9>

A cured rubber product was obtained in the same manner as Example 7, except that pulverizing of the dried body was carried out using a FreDrive conical screen mill by EarthTechnica Co., Ltd., instead of the MS-05 Mini Speed Mill by Labonect Co.

<Example 10>

A cured rubber product was obtained in the same manner as Example 7, except that pulverizing of the dried body was carried out using a FreDrive pin mill by EarthTechnica Co., Ltd., instead of the MS-05 Mini Speed Mill by Labonect Co.
The powder obtained by pulverizing the dried body was dyed with $OsO_4$ for 12 hours, mixed with an epoxy resin and allowed to stand at ordinary temperature for 48 hours for curing of the epoxy resin. When the cured sample was cut with an ultramicrotome to form a smooth cross-section, subjected to Os plasma coating for 1 second and observed using a scanning electron microscope (SU8220 by Hitachi High-Technologies Corp.) under conditions with an acceleration voltage of 1.5 kV, 3 mm WD and an upper detector, the cellulose nanofibers were found to be covered by the rubber component (Fig. 1). In Fig. 1, the dark gray portions are the cellulose nanofibers, while the light gray portions surrounding the cellulose nanofibers are the first rubber component and the black portions are the epoxy resin. From Fig. 1 it was confirmed that the cellulose nanofibers were covered by the first rubber component.

<Example 11>

A cured rubber product was obtained in the same manner as Example 7, except that the surfactant used was surfactant-2 instead of surfactant-1.

<Example 12>

A cured rubber product was obtained in the same manner as Example 7, except that the aqueous dispersion was prepared so that the final composition of the aqueous dispersion was 92.86 mass% water, 5 mass% cellulose fibers, 1.43 mass% liquid rubber and 0.71 mass% surfactant instead of 90 mass% water, 5 mass% cellulose fibers, 2.86 mass% liquid rubber and 2.14 mass% surfactant, and 7.14 parts by mass of the cured rubber production powder was added instead of 10 parts by mass during the first-stage kneading.

<Example 13>

A cured rubber product was obtained in the same manner as Example 7, except that the aqueous dispersion was prepared so that the final composition of the aqueous dispersion was 93.58 mass% water, 5 mass% cellulose fibers, 0.71 mass% liquid rubber and 0.71 mass% surfactant instead of 90 mass% water, 5 mass% cellulose fibers, 2.86 mass% liquid rubber and 2.14 mass% surfactant, and 6.42 parts by mass of the cured rubber production powder was added instead of 10 parts by mass during the first-stage kneading.

<Example 14>

A cured rubber product was obtained in the same manner as Example 7, except that the aqueous dispersion was prepared so that the final composition of the aqueous dispersion was 85 mass% water, 5 mass% cellulose fibers, 7.86 mass% liquid rubber and 2.14 mass% surfactant instead of 90 mass% water, 5 mass% cellulose fiber, 2.86 mass% liquid rubber and 2.14 mass% surfactant, and the pulverized dried body was frozen and pulverized using a Freezer Mill 6875 by Spex Co. instead of the Mini Speed Mill MS-05 by Labonect Co.

<Example 15>

A Laboplastomil by Toyo Seiki Co., Ltd. was heated to 70°C, 100 parts by mass of rubber-1 (ASAPRENE Y031) was added and the mixture was kneaded for 0.5 minutes, after which 30 parts by mass of the cured rubber production powder produced in Example 7 was added and kneading was continued for 5.5 minutes to prepare a master batch. A Laboplastomil was then heated to 70°C, and 67 parts by mass of rubber-1 (ASAPRENE Y031) and 43 parts by mass of the master batch were added and the mixture was kneaded for 0.5 minutes, after which a vulcanizing aid (2.5 parts by mass zinc oxide and 2 parts by mass stearic acid), 1.5 parts by mass of wax and 2 parts by mass of an antioxidant were added and kneaded for 5.5 minutes, as the first-stage kneading. After then adding 1.7 parts by mass of sulfur and a vulcanization accelerator (1.7 parts by mass of NOCCELER CZ and 2 parts by mass of NOCCELER D), the mixture was kneaded for 2 minutes. The resulting second-stage kneaded composition was vulcanized with a vulcanizing press for 20 minutes at 160°C to obtain a cured rubber product.

<Reference Example 5>

A cured rubber product was obtained in the same manner as Example 7, except that drying of the dried body was carried out by reduced pressure drying at 80°C using a Henschel mixer instead of drying at 80°C using an SPH-201 by Espec Corp., and the dried powder was used without pulverizing.

<Reference Example 6>

A cured rubber product was obtained in the same manner as Example 7, except that the pulverization time for the dried body was changed from 30 seconds to 5 seconds.

<Reference Example 7>

Purified water was added to CNF-2 (aqueous dispersion of cellulose fibers) to prepare an aqueous dispersion with a final cellulose nanofiber content of 5 mass%. To this there were added liquid rubber-1 and surfactant-1, to prepare an aqueous dispersion with a final composition of 82.86 mass% water, 5 mass% cellulose fibers, 10 mass% liquid rubber and 2.14 mass% surfactant. The aqueous dispersion was mixed for 5 minutes using an ARE-310 rotating/revolving mixer by Thinky Corp., to obtain a dispersion of a cellulose nanofiber composition. The resulting dispersion was dried at 80°C using an SPH-201 by Espec Corp. to obtain a dried body. The obtained dried body was processed for 30 seconds using an MS-05 Mini Speed Mill by Labonect Co. The processed dried body did not form a powder, instead consisting of fragments of several mm in size.

A Laboplastomil by Toyo Seiki Co., Ltd. was then used for heating at 70°C, and then 100 parts by mass of rubber-1 (ASAPRENE Y031) was added and the mixture was kneaded for 0.5 minutes, after which 17.14 parts by mass of the cured rubber production powder, a vulcanizing aid (2.5 parts by mass zinc oxide and 2 parts by mass stearic acid), 1.5 parts by mass of wax and 2 parts by mass of an antioxidant were added and kneaded for 5.5 minutes as the first-stage kneading. The resulting first-stage kneaded composition was then added to a Laboplastomil that had been heated to 70°C, and after kneading for 0.5 minutes, 1.7 parts by mass of sulfur and a vulcanization accelerator (1.7 parts by mass of NOCCELER CZ and 2 parts by mass of NOCCELER D) were added according to the composition listed in Table 2 and the mixture was kneaded for 2 minutes. The resulting second-stage kneaded composition was vulcanized with a vulcanizing press for 20 minutes at 160°C to obtain a cured rubber product.

<Evaluation results for Examples 7 to 15 and Reference Examples 5 to 7>

Table 2 shows the evaluation results for Examples 7 to 15 and Reference Examples 5 to 7. The Examples were confirmed to have satisfactory dispersion of the cellulose nanofibers in the rubber, with notable improvement in physical properties.

[Table 2]

Table 2

| | | | Units | Example 7 | Example 8 | Example 9 | Example 10 | Example 11 | Example 12 | Example 13 | Example 14 | Example 15 | Ref. Example 5 | Ref. Example 6 | Ref. Example 7 |
|---|---|---|---|---|---|---|---|---|---|---|---|---|---|---|---|
| Rubber composition dispersion content | Water | | mass% | 90.00 | 90.00 | 90.00 | 90.00 | 90.00 | 92.86 | 93.58 | 85.00 | Same as Example 7 | 90.00 | 90.00 | 82.86 |
| | Cellulose | CNF-2 | mass% | 5.00 | 5.00 | 5.00 | 5.00 | 5.00 | 5.00 | 5.00 | 5.00 | | 5.00 | 5.00 | 5.00 |
| | Nonionic surfactant | Surfactant-1 | mass% | 2.14 | 2.14 | 2.14 | 2.14 | | 0.71 | 0.71 | 2.14 | | 2.14 | 2.14 | 2.14 |
| | | Surfactant-2 | mass% | | | | | 2.14 | | | | | | | |
| | Liquid rubber | Liquid rubber-1 | mass% | 2.86 | 2.86 | 2.86 | 2.86 | 2.86 | 1.43 | 0.71 | 7.86 | | 2.86 | 2.86 | 10.00 |
| Evaluation | Powder | Loose bulk density | g/cm$^3$ | 0.095 | 0.089 | 0.196 | 0.073 | 0.138 | 0.127 | 0.234 | 0.096 | | 0.360 | 0.315 | No powder formed |
| | | Compacted bulk density | g/cm$^3$ | 0.200 | 0.138 | 0.387 | 0.101 | 0.188 | 0.237 | 0.308 | 0.210 | | 0.591 | 0.465 | |
| | Cured rubber product | Storage modulus | MPa | 1.51 | 1.68 | 1.45 | 1.71 | 1.47 | 1.44 | 1.31 | 2.10 | 1.66 | 0.84 | 0.92 | 0.79 |
| | | Tensile strength | MPa | 2.04 | 2.61 | 1.96 | 2.77 | 2.11 | 2.15 | 1.78 | 3.51 | 2.39 | 1.60 | 1.53 | 1.21 |
| | | Dispersibility (visual judgment) | A-C | A | A | B | A | A | A | B | A | A | C | C | C |

31

INDUSTRIAL APPLICABILITY

The rubber composition of the disclosure allows molded articles with satisfactory physical properties to be formed, and can therefore be suitably applied for a wide range of purposes including industrial machinery parts, general machine parts, automobile/railway/vehicle/ship/aerospace-related parts, electronic and electrical components, construction and civil engineering materials, daily household items, sports and leisure goods, wind power generation case members, and container and packaging materials.

**Claims**

1. A rubber composition including cellulose nanofibers, a first rubber component which is a liquid rubber, and a surfactant, wherein the surfactant is a nonionic surfactant.

2. The rubber composition according to claim 1, wherein the cellulose nanofibers contain no ionic groups.

3. The rubber composition according to claim 1 or 2, wherein a degree of substitution of the cellulose nanofibers is 0.

4. The rubber composition according to any one of claims 1 to 3, which includes the cellulose nanofibers at 0.5 mass% to 10 mass%.

5. The rubber composition according to any one of claims 1 to 4, which includes the surfactant at 10 parts by mass to 200 parts by mass with respect to 100 parts by mass of the cellulose nanofibers.

6. The rubber composition according to any one of claims 1 to 5, wherein the nonionic surfactant is a compound having a hydrophilic group selected from the group consisting of hydroxyl, carboxy, sulfonic acid and amino groups, and a hydrocarbon group.

7. The rubber composition according to any one of claims 1 to 6, wherein the nonionic surfactant is one or more types selected from the group consisting of compounds represented by the following general formula (1):

$$R\text{-}(OCH2CH2)_m\text{-}OH \qquad (1)$$

[where R represents a monovalent aliphatic group of 6 to 30 carbon atoms, and m is a natural number smaller than the number of carbon atoms of R], and
compounds represented by the following general formula (2):

$$R_1OCH_2\text{-}(CHOH)_4\text{-}CH_2OR_2 \qquad (2)$$

[where $R_1$ and $R_2$ each independently represent a hydrogen atom, an aliphatic group of 1 to 30 carbon atoms, $\text{-}COR_3$ {where $R_3$ represents an aliphatic group of 1 to 30 carbon atoms} or $\text{-}(CH_2CH_2O)_y\text{-}R_4$ {where $R_4$ represents a hydrogen atom or an aliphatic group of 1 to 30 carbon atoms, and y is an integer of 1 to 30}].

8. The rubber composition according to any one of claims 1 to 7, wherein at least parts of the surfaces of the cellulose nanofibers are covered by the first rubber component.

9. A powder composed of the rubber composition according to any one of claims 1 to 8.

10. The powder according to claim 9, wherein the compacted bulk density is 0.01 g/cm$^3$ to 0.30 g/cm$^3$.

11. A master batch which is a kneaded blend of the powder according to claim 9 or 10 and a second rubber component.

12. A method for producing a master batch, wherein the method includes a step of kneading the powder according to claim 9 or 10 and a second rubber component to obtain a master batch.

13. A rubber composite which is a kneaded blend of the powder according to claim 9 or 10 or the master batch according to claim 11, and a third rubber component.

14. The rubber composite according to claim 13, wherein at least parts of the surfaces of the cellulose nanofibers are covered by the first rubber component.

15. A method for producing a rubber composite, wherein the method includes a step of obtaining a rubber composite by:

kneading the powder according to claim 9 or 10 and a third rubber component, or
forming a master batch by the method according to claim 12 and then kneading the master batch with a third rubber component.

16. The method according to claim 15, wherein at least parts of the surfaces of the cellulose nanofibers are covered by the first rubber component in the rubber composite.

17. A cured rubber product, which is the cured product of the rubber composite according to claim 13 or 14.

18. A method for producing a cured rubber product, wherein the method includes:

a step of obtaining a rubber composite by the method according to claim 15 or 16, and
a step of curing the rubber composite to obtain a cured rubber product.

19. A shoe outsole which includes a cured rubber product according to claim 17.

20. A tire which includes a cured rubber product according to claim 17.

21. Vibration-proof rubber which includes a cured rubber product according to claim 17.

22. A drive belt which includes a cured rubber product according to claim 17.

**Patentansprüche**

1. Kautschukzusammensetzung, die Cellulose-Nanofasern, eine erste Kautschukkomponente, die ein flüssiger Kautschuk ist, und ein Tensid enthält, wobei das Tensid ein nichtionisches Tensid ist.

2. Kautschukzusammensetzung nach Anspruch 1, wobei die Cellulose-Nanofasern keine ionischen Gruppen enthalten.

3. Kautschukzusammensetzung nach Anspruch 1 oder 2, wobei ein Substitutionsgrad der Cellulose-Nanofasern 0 beträgt.

4. Kautschukzusammensetzung nach einem der Ansprüche 1 bis 3, die die Cellulose-Nanofasern mit 0,5 Masse% bis 10 Masse% enthält.

5. Kautschukzusammensetzung nach einem der Ansprüche 1 bis 4, die das Tensid mit 10 Masseteilen bis 200 Masseteilen bezogen auf 100 Masseteile der Cellulose-Nanofasern enthält.

6. Kautschukzusammensetzung nach einem der Ansprüche 1 bis 5, wobei das nichtionische Tensid eine Verbindung mit einer hydrophilen Gruppe ausgewählt aus der Gruppe bestehend aus Hydroxy-, Carboxy-, Sulfonsäure- und Aminogruppen und einer Kohlenwasserstoffgruppe ist.

7. Kautschukzusammensetzung nach einem der Ansprüche 1 bis 6, wobei das nichtionische Tensid ein oder mehrere Typen ausgewählt aus der Gruppe bestehend aus Verbindungen dargestellt durch die folgende allgemeine Formel (1):

$$R\text{-}(OCH_2CH_2)_m\text{-}OH \qquad (1)$$

[wobei R eine einwertige aliphatische Gruppe mit 6 bis 30 Kohlenstoffatomen darstellt und m eine natürliche Zahl kleiner als die Anzahl von Kohlenstoffatomen von R ist] und
Verbindungen dargestellt durch die folgende allgemeine Formel (2) ist:

$$R_1OCH_2\text{-}(CHOH)_4\text{-}CH_2OR_2 \qquad (2)$$

[wobei $R_1$ und $R_2$ jeweils unabhängig ein Wasserstoffatom, eine aliphatische Gruppe mit 1 bis 30 Kohlenstoffatomen, -$COR_3$ {wobei $R_3$ eine aliphatische Gruppe mit 1 bis 30 Kohlenstoffatomen darstellt} oder -$(CH_2CH_2O)_y$-$R_4$ {wobei $R_4$ ein Wasserstoffatom oder eine aliphatische Gruppe mit 1 bis 30 Kohlenstoffatomen darstellt und y eine ganze Zahl von 1 bis 30 ist} darstellen].

8. Kautschukzusammensetzung nach einem der Ansprüche 1 bis 7, wobei wenigstens Teile der Oberflächen der Cellulose-Nanofasern mit der ersten Kautschukkomponente bedeckt sind.

9. Pulver bestehend aus der Kautschukzusammensetzung nach einem der Ansprüche 1 bis 8.

10. Pulver nach Anspruch 9, wobei die Stampfdichte 0,01 g/cm$^3$ bis 0,30 g/cm$^3$ beträgt.

11. Masterbatch, das ein geknetetes Gemisch des Pulvers nach Anspruch 9 oder 10 und einer zweiten Kautschukkomponente ist.

12. Verfahren zur Herstellung eines Masterbatchs, wobei das Verfahren einen Schritt des Knetens des Pulvers nach Anspruch 9 oder 10 und einer zweiten Kautschukkomponente enthält, um ein Masterbatch zu erhalten.

13. Kautschukverbundstoff, der ein geknetetes Gemisch des Pulvers nach Anspruch 9 oder 10 oder des Masterbatchs nach Anspruch 11 und einer dritten Kautschukkomponente ist.

14. Kautschukverbundstoff nach Anspruch 13, wobei wenigstens Teile der Oberflächen der Cellulose-Nanofasern mit der ersten Kautschukkomponente bedeckt sind.

15. Verfahren zur Herstellung eines Kautschukverbundstoffs, wobei das Verfahren einen Schritt des Erhaltens eines Kautschukverbundstoffs enthält durch:

    Kneten des Pulvers nach Anspruch 9 oder 10 und einer dritten Kautschukkomponente oder
    Bilden eines Masterbatchs durch das Verfahren nach Anspruch 12 und dann Kneten des Masterbatchs mit einer dritten Kautschukkomponente.

16. Verfahren nach Anspruch 15, wobei wenigstens Teile der Oberflächen der Cellulose-Nanofasern mit der ersten Kautschukkomponente in dem Kautschukverbundstoff bedeckt sind.

17. Gehärtetes Kautschukprodukt, das das gehärtete Produkt des Kautschukverbundstoffs nach Anspruch 13 oder 14 ist.

18. Verfahren zur Herstellung eines gehärteten Kautschukprodukts, wobei das Verfahren enthält:

    einen Schritt des Erhaltens eines Kautschukverbundstoffs durch das Verfahren nach Anspruch 15 oder 16 und einen Schritt des Härtens des Kautschukverbundstoffs, um ein gehärtetes Kautschukprodukt zu erhalten.

19. Schuh-Laufsohle, die ein gehärtetes Kautschukprodukt nach Anspruch 17 enthält.

20. Reifen, der ein gehärtetes Kautschukprodukt nach Anspruch 17 enthält.

21. Vibrationsfester Kautschuk, der ein gehärtetes Kautschukprodukt nach Anspruch 17 enthält.

22. Antriebsriemen, der ein gehärtetes Kautschukprodukt nach Anspruch 17 enthält.

**Revendications**

1. Composition de caoutchouc comprenant des nanofibres de cellulose, un premier composant caoutchouc qui est un caoutchouc liquide, et un tensioactif, ledit tensioactif étant un tensioactif non ionique.

2. Composition de caoutchouc selon la revendication 1, dans laquelle les nanofibres de cellulose ne contiennent pas de groupes ioniques.

3. Composition de caoutchouc selon la revendication 1 ou 2, dans laquelle un degré de substitution des nanofibres de cellulose est de 0.

4. Composition de caoutchouc selon l'une quelconque des revendications 1 à 3, qui comprend les nanofibres de cellulose à raison de 0,5 % en masse à 10 % en masse.

5. Composition de caoutchouc selon l'une quelconque des revendications 1 à 4, qui comprend le tensioactif à raison de 10 parties en masse à 200 parties en masse par rapport à 100 parties en masse des nanofibres de cellulose.

6. Composition de caoutchouc selon l'une quelconque des revendications 1 à 5, dans laquelle le tensioactif non ionique est un composé ayant un groupe hydrophile choisi dans le groupe constitué par les groupes hydroxyle, carboxy, acide sulfonique et amino, et un groupe hydrocarboné.

7. Composition de caoutchouc selon l'une quelconque des revendications 1 à 6, dans laquelle le tensioactif non ionique est un ou plusieurs types choisis dans le groupe constitué par les composés représentés par la formule générale (1) suivante :

$$R\text{-}(OCH_2CH_2)_m\text{-}OH \qquad (1)$$

[où R représente un groupe aliphatique monovalent de 6 à 30 atomes de carbone, et m est un nombre naturel inférieur au nombre d'atomes de carbone de R], et
les composés représentés par la formule générale (2) suivante :

$$R_1OCH_2\text{-}(CHOH)_4\text{-}CH_2OR_2 \qquad (2)$$

[où $R_1$ et $R_2$ représentent chacun indépendamment un atome d'hydrogène, un groupe aliphatique de 1 à 30 atomes de carbone, -$COR_3$ {où $R_3$ représente un groupe aliphatique de 1 à 30 atomes de carbone} ou -$(CH_2CH_2O)_y$-$R_4$ {où $R_4$ représente un atome d'hydrogène ou un groupe aliphatique de 1 à 30 atomes de carbone, et y est un entier de 1 à 30}].

8. Composition de caoutchouc selon l'une quelconque des revendications 1 à 7, dans laquelle au moins des parties des surfaces des nanofibres de cellulose sont recouvertes par le premier composant caoutchouc.

9. Poudre composée de la composition de caoutchouc selon l'une quelconque des revendications 1 à 8.

10. Poudre selon la revendication 9, dans laquelle la densité apparente compactée est de 0,01 g/cm$^3$ à 0,30 g/cm$^3$.

11. Mélange maître qui est un mélange malaxé de la poudre selon la revendication 9 ou 10 et d'un second composant caoutchouc.

12. Procédé de production d'un mélange maître, dans lequel le procédé comprend une étape de malaxage de la poudre selon la revendication 9 ou 10 et d'un second composant caoutchouc pour obtenir un mélange maître.

13. Composite de caoutchouc qui est un mélange malaxé de la poudre selon la revendication 9 ou 10 ou du mélange maître selon la revendication 11, et d'un troisième composant caoutchouc.

14. Composite de caoutchouc selon la revendication 13, dans lequel au moins des parties des surfaces des nanofibres de cellulose sont recouvertes par le premier composant caoutchouc.

15. Procédé de production d'un composite de caoutchouc, dans lequel le procédé comprend une étape d'obtention d'un composite de caoutchouc par :

malaxage de la poudre selon la revendication 9 ou 10 et d'un troisième composant caoutchouc, ou formation d'un mélange maître par le procédé selon la revendication 12, puis malaxage du mélange maître avec un troisième composant caoutchouc.

16. Procédé selon la revendication 15, dans lequel au moins des parties des surfaces des nanofibres de cellulose sont recouvertes par le premier composant caoutchouc dans le composite de caoutchouc.

17. Produit en caoutchouc durci, qui est le produit durci du composite de caoutchouc selon la revendication 13 ou 14.

18. Procédé de production d'un produit en caoutchouc durci, le procédé comprenant :

une étape d'obtention d'un composite de caoutchouc par le procédé selon la revendication 15 ou 16, et une étape de durcissement du composite de caoutchouc pour obtenir un produit en caoutchouc durci.

19. Semelle extérieure de chaussure qui comprend un produit en caoutchouc durci selon la revendication 17.

20. Pneu qui comprend un produit en caoutchouc durci selon la revendication 17.

21. Caoutchouc résistant aux vibrations qui comprend un produit en caoutchouc durci selon la revendication 17.

22. Courroie d'entraînement qui comprend un produit en caoutchouc durci selon la revendication 17.

FIG. 1

220131- 0015 1.5kV 3.0mm x20.0k LA100(U)         2.00μm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019147877 A
- JP 4012283 B
- JP 60035006 A
- JP 60035007 A
- JP 60035008 A
- JP 5155930 A
- JP 3163088 A
- US 5272236 A

**Non-patent literature cited in the description**

- Mokushitsu Kagaku Jikken Manual. 2000, 92-97